# EUROPÄISCHE PATENTSCHRIFT

(11) **EP 4 004 586 B1**
(45) Veröffentlichungstag und Bekanntmachung des Hinweises auf die Patenterteilung: **24.07.2024**
(21) Anmeldenummer: 20750209.7
(22) Anmeldetag: 28.07.2020
(51) Int. Cl.: G01S 7/481, G01S 17/86, G01S 17/89, G01C 15/00, F16M 13/04, G01S 17/87, A45F 3/10

(54) **GESTELL FÜR ZUMINDEST EINE SCANEINRICHTUNG UND RAUMERFASSUNGSVORRICHTUNG MIT ZUMINDEST EINER SCANEINRICHTUNG**
FRAME FOR AT LEAST ONE SCANNING APPARATUS AND SPATIAL CAPTURING DEVICE HAVING AT LEAST ONE SCANNING APPARATUS
BÂTI DESTINÉ À AU MOINS UN DISPOSITIF DE BALAYAGE ET DISPOSITIF DE DÉTECTION DANS L'ESPACE COMPORTANT AU MOINS UN DISPOSITIF DE BALAYAGE

(30) Priorität: 31.07.2019 DE 102019120702
(43) Veröffentlichungstag der Anmeldung: 01.06.2022
(73) Patentinhaber: NavVis GmbH, 80636 München (DE)
(72) Erfinder: CHRISTENSEN, Nils, 80636 München (DE); DOSHI, Prashant, 80636 München (DE); HABIGT, Tim, 80636 München (DE); JASCHKE, Michael, 80636 München (DE); MAIDT, Mandolin, 80636 München (DE); PLISZEWSKI, Malte, 80636 München (DE); SCHROTH, Georg, 80636 München (DE); WERNER, Christian, 80636 München (DE)
(74) Vertreter: Meissner Bolte Partnerschaft mbB
(86) Internationale Anmeldenummer: PCT/EP2020/071289
(87) Internationale Veröffentlichungsnummer: WO 2021/018900

(56) Entgegenhaltungen:
- US-A- 4 015 759
- US-A- 4 037 763
- US-A1- 2012 000 948
- US-B1- 8 941 777
- MARIANA CAMPOS ET AL: "A Backpack-Mounted Omnidirectional Camera with Off-the-Shelf Navigation Sensors for Mobile Terrestrial Mapping: Development and Forest Application", SENSORS, vol. 18, no. 3, 9 March 2018 (2018-03-09), pages 827, XP055734705, DOI: 10.3390/s18030827
- ANONYMOUS: "Leica Pegasus: Backpack Mobile reality capture", 31 March 2017 (2017-03-31), XP055735333, Retrieved from the Internet <URL:http://www.noartechnologies.com/wp-content/uploads/2017/03/Leica_PegasusBackpack_en.pdf> [retrieved on 20200930]

## Beschreibung

Die vorliegende Erfindung betrifft ein Gestell für zumindest eine Scaneinrichtung zum Tragen der Scaneinrichtung mittels des Körpers einer Person, wobei das Gestell eine Trageeinrichtung zum Anlegen und Tragen des Gestells durch die Person umfasst. Die Trageeinrichtung umfasst eine Schulterauflage zum Anlegen des Gestells auf den Schultern der Person. Ferner umfasst das Gestell einen oberen Gestellabschnitt, an dem eine erste Halterung für die zumindest eine Scaneinrichtung befestigt ist, wobei sich die erste Halterung oberhalb des Kopfes der Person befindet, wenn die Person das Gestell mittels der Trageeinrichtung trägt. Des Weiteren betrifft die Erfindung eine Raumerfassungsvorrichtung mit zumindest einer Scaneinrichtung und einem solchen Gestell.

Es sind verschiedene Erfassungssysteme zum Erfassen von Objekträumen innerhalb von Gebäuden und im Außenbereich bekannt. Die vorliegende Erfindung betrifft insbesondere das Erfassen eines Objektraums innerhalb eines Gebäudes. Ein solches System ist beispielsweise in der EP 2 913 796 A1 beschrieben. In diesem Fall wird ein Laserscanner in Verbindung mit mehreren Kameras verwendet. Aus den Signalen des Laserscanners und den Bildern der Kameras wird eine Punktwolke erzeugt, aus der ein dreidimensionales Gebäudemodell erstellt wird.

Für den Außenbereich existieren vergleichbare Erfassungssysteme, die auf Fahrzeugen und Flugzeugen montiert werden können. Die Referenzierung der erfassten Daten auf ein Koordinatensystem geschieht bei diesen Systemen in der Regel durch eine Positionsbestimmung mit Hilfe von Satellitennavigationssystemen.

Innerhalb von Gebäuden besteht diese Möglichkeit der Positionsbestimmung nicht, da dort keine Signalverbindung zu den Navigationssatelliten verfügbar ist. Außerdem ist die Positionsbestimmung für das Erfassen eines Objektraums mittels Satellitennavigation zu ungenau. Aus diesem Grund wird auch im Außenbereich für die Positionsbestimmung ergänzend auf Radodometrie, Laserodometrie oder Trägheitsnavigation (INS) zurückgegriffen. Die Satellitennavigation spielt dabei für die Georeferenzierung und Reduktion des Langzeitdrifts eine Rolle.

Für die Positionsbestimmung innerhalb von Gebäuden während der mobilen Erfassung von Objekträumen ist insbesondere eine möglichst schnelle Positionsbestimmung in Echtzeit erforderlich, um dem Bediener des Systems auf einem Bildschirm eine Darstellung des Erfassungsvorganges in der Umgebung in Echtzeit liefern zu können, damit dieser den Erfassungsvorgang so steuern kann, dass der Gebäudeinnenraum möglichst lückenlos und in hoher Qualität abgescannt wird.

Ferner ist es erforderlich, dass eine möglichst präzise nachgelagerte Positionsbestimmung im Zeitverlauf, das heißt die Bestimmung der Trajektorie beim Erfassen des Objektraums, in der Nachverarbeitung möglich ist. Nur in diesem Fall können die kontinuierlich erfassten Messungen der Laserscanner und die in der Regel im Abstand von jeweils wenigen Metern erfassten Panorama-Bilder zu einem präzisen, konsistenten 3D-Modell des Gebäudes zusammengefügt werden, beispielsweise durch Erstellung einer Punktwolke oder eines Polygonnetzes.

Auf die verschiedenen Methoden zur Positions- und Trajektorienbestimmung wird weiter unten eingegangen. Im weiteren folgt zunächst eine Darstellung der Datenerfassungsmethoden und Anwendungsszenarien:
Bei der Erfassung von Punktwolken mit Hilfe von Laserscannern kommen in der Regel Systeme zum Einsatz, bei denen ein Laserstrahl durch einen um eine Achse rotierenden Spiegel in einer Ebene im Raum ausgesandt wird. Alternativ können Phased-Array-Laser ohne bewegliche Teile eingesetzt werden, um einen abtastenden Laserstrahl zu erzeugen.

Die hierbei gelieferten Daten enthalten für jedes Datenelement (Punkt der Punktwolke) in der Regel den jeweiligen Zeitstempel des jeweils ausgesandten Laserimpulses mit der zugehörigen Winkelstellung innerhalb der Rotationsachse. Ferner enthält jedes dieser Datenelemente einen oder mehrere Werte, die aus einem oder mehreren nacheinander empfangenen Reflexionssignalen abgeleitet werden und die aus der Laserlicht-Laufzeit berechnete Entfernung der jeweils reflektierenden Oberflächen in Richtung des Aussendestrahls sowie die zugehörigen Reflexionsintensitäten angeben. Halbtransparente oder halbspiegelnde Oberflächen können hierbei dazu führen, dass kurz nacheinander mehrere Reflexionssignale empfangen werden, die dann zu unterschiedlich weit entfernten Oberflächen gehören.

Aus den empfangenen Reflexionssignalen werden Entfernungen berechnet. Hieraus können zusammen mit den Intensitäten der Reflexionssignale dreidimensionale Punktkoordinaten berechnet werden, welche dann die Punktwolke bilden. Um aus den Erfassungsvorgängen mittels des bewegten Laserscanners ein konsistentes dreidimensionales Modell aufbauen zu können, wird für jede Messung ein Zeitstempel sowie die exakte Positionenausrichtung des Laserscanners im Raum erfasst.

Ähnlich verhält es sich mit den Bildinformationen von Panoramakameras, die in der Regel nur aus Bilddateien bestehen, die mit einem Zeitstempel des Aufnahmezeitpunktes versehen sind. Auch hier muss zu jedem Zeitstempel und zu jeder Bilddatei die genaue Position und Ausrichtung der jeweiligen Kamera im Raum bekannt sein oder bestimmt werden, damit - unter Zuhilfenahme von bekannten oder durch Kalibrierung zu bestimmenden Kameraparametern, wie zum Beispiel Objektivbrennweite und Abbildungscharakteristik, sowie Sensorgröße und - auflösung - die Bilddaten und die Punktwolken-Daten einander zugeordnet werden können. Auf diese Weise kann ein Objektraum dreidimensional erfasst werden.

Panoramabilder können außerdem dazu verwendet werden, einen sehr realitätsgetreuen virtuellen Rundgang durch den erfassten Objektraum zu ermöglichen. Hier stehen die Bilddateien im Vordergrund, die mittels sogenanntem "*Stitching*" unter Zuhilfenahme der 3D-Information (Position und Ausrichtung der jeweiligen Kamera im Raum) zu lückenlosen 360-Grad-Panoramen zusammengefügt werden können, die der genauen Ansicht an einem bestimmten Punkt der Umgebung entsprechen, wie sie ein Betrachter vor Ort wahrnehmen würde. Die Gesamtheit der Panoramabilder repräsentiert hierbei eine Vielzahl einzelner diskreter Positionen, an denen die zugrundeliegenden Bilder aufgenommen wurden. Der Betrachter kann lediglich von einer diskreten Position zu einer anderen diskreten Position springen und von Panoramabild zu Panoramabild wechseln, im Gegensatz zum oben angeführten Punktwolkenmodell, das kontinuierlich "durchflogen" werden kann. Das als Hintergrundinformation vorhandene Punktwolken-Modell kann hierbei dazu verwendet werden, um die Übergänge zwischen den einzelnen Panoramabildern als Überblendungen von unterschiedlich transformierten individuellen Teilausschnitten (zum Beispiel Tischoberflächen) so zu animieren, dass der Betrachter den Eindruck einer halbwegs flüssigen Bewegung im 3D-Raum zwischen den zwei diskreten Positionen erhält. Durch das Punktwolkenmodell ergeben sich noch weitere Möglichkeiten, wie zum Beispiel eine Einblendung der Punktwolke über die Foto-Panorama-Ansicht oder eine Zuordnung einer genauen 3D-Koordinate zu jedem Pixel des Panoramabildes (was zum Beispiel Längenmessungen von aufgenommen Objekten durch Anklicken der Begrenzungspunkte im Panoramabild sowie die Einblendung von ortsbezogenen Informationen (*"Points of Interest*") in die Panoramabilder ermöglicht).

Für kleinere Gebäude ist die Erfassung der Umgebung im Innenraum des Gebäudes durch gleichzeitige Aufnahme von Punktwolkendaten und Panoramabildern auch durch stationäre, stativgebundene Geräte möglich, die von Position zu Position bewegt werden. Die Positionen können hierbei zum Beispiel an festen Bezugspunkten und Marken im Raum ausgerichtet werden, die sich auch in bereits vorab existierenden Plänen wiederfinden, was die Zuordnung erleichtert.

Für die schnelle Erfassung großer Gebäude, insbesondere des Innenraums des Gebäudes, ist aber die kontinuierliche Erfassung durch ein mobiles System vorteilhaft. Hierfür werden z. B. fahrbare Geräte in "Trolley"-Bauform eingesetzt, die durch einen Bediener geschoben werden. Ein fahrbares Gestell liefert in diesem Fall eine höhere Stabilität. In Ruheposition können daher verwacklungsfreie Bilder aufgenommen werden. Des Weiteren können größere und schwerere, Kameraobjektive mit höherer Qualität, Laserscanner, Elektronikbauteile und Energiespeicher an dem fahrbaren Gerät befestigt und auf diese Weise sehr komfortabel bewegt werden. Bei allen genannten mobilen Erfassungssystemen besteht - wie oben erläutert - das Problem, dass die Trajektorie, und für Systeme, die eine visuelle Überwachung des Erfassungsvorgangs auf einem Bildschirm ermöglichen sollen, auch die Momentanposition in Echtzeit effizient und präzise bestimmt werden muss.

Hierfür können unterschiedliche Verfahren zum Einsatz kommen, die auch kombiniert werden können. Zum einen kommen inertiale Messeinheiten (IMU, "*Inertial Measurement Unit*") zur Trägheitsnavigation in Frage, die einen oder mehrere Inertialsensoren, wie Beschleunigungssensoren und Drehratensensoren, kombinieren. Ein Problem hierbei ist jedoch der Umstand, dass sich Messfehler aufsummieren, was zu einer starken "Drift" führen kann. Aus diesem Grund werden IMUs oft nur unterstützend eingesetzt. Gleiches gilt für Odometer.

In der Praxis kommen für mobile Systeme außerdem sogenannte SLAM-Verfahren zum Einsatz ("*Simultaneous Localization and Mapping*")*.* Diese basieren auf der Annahme, dass die erfasste Umgebung statisch ist und sich nur das Erfassungssystem selbst bewegt. Im Falle eines Laserscanners werden hierbei zum Beispiel die erfassten Daten eines Laserspiegel-Rotationsdurchganges mit denen eines oder mehrerer vorangegangener Durchgänge verglichen. Unter der Annahme, dass die Umgebung statisch ist und sich das Erfassungssystem linear parallel zur Laserscan-Ebene bewegt hat, würden die beiden Punktmengen der beiden Messdurchgänge innerhalb von Messtoleranzen mehr oder weniger deckungsgleich, aber translatorisch und/oder rotatorisch verschoben sein, so dass sich hieraus unmittelbar und gleichzeitig ein Profil der Umgebung als 2D-Schnitt durch den 3D-Raum (entsprechend der Laserscanner-Ebene) und gleichzeitig der Bewegung/Drehung des Erfassungssystems innerhalb dieses 2D-Schnittes ergibt (daher der Begriff "*Simultaneous Localization and Mapping*")*.* In der Praxis darf hierbei die Bewegung und insbesondere die Drehung in Relation zur Scanfrequenz jedoch nicht zu schnell erfolgen.

Die algorithmische Zuordnung von zeitlich auseinanderliegenden Messpunkten zu identischen, mehrfach gescannten Umgebungsmerkmalen und daraus die Bestimmung der Trajektorie des Erfassungssystems und die Erstellung eines Gesamtmodells der Umgebung ist bei ausreichender Menge und Redundanz an Messpunkten zwar auch möglich, wenn sich die Laserscanner-Erfassungsrichtung im Zeitverlauf ändert und beliebig zur Bewegung des Erfassungssystems angeordnet ist, je nach Größe und Verteilung der Punktwolke und Merkmalen im Raum kann dies jedoch sehr lange Rechenzeiten erfordern, so dass diese Verfahren in der Regel bei hohem Detaillierungsgrad nur in der Nachverarbeitung ("*Post-Processing*") eingesetzt werden können, aber nicht zur Echtzeit-Darstellung der Bewegung im Raum während des Erfassungsvorgangs. So ist es beispielsweise bei den oben erwähnten stationären, stativgebundenen Lösungen üblich, die erfassten Daten der einzelnen Scan-Positionen in ein cloud-basiertes Rechenzentrum hochzuladen und dort in einer Nachverarbeitung zu einem konsistenten Modell zusammenfügen zu lassen.

Vergleichbar hiermit sind photogrammetrische Verfahren, bei denen aus einer Vielzahl von Bildern, die von ein und demselben Objekt oder derselben Umgebung aus verschiedenen Blickwinkeln aufgenommen wurden, ein texturiertes 3D-Modell erstellt werden kann, indem zum Beispiel das sogenannte *Bundle-Adjustment-*Verfahren zum Einsatz kommt, bei dem in einem Optimierungsprozess gleichzeitig die Positionen der Punkte im 3D-Raum, die Positionen und Orientierungen der beobachtenden Kameras sowie deren interne Kalibrierparameter an die Messbilder angepasst werden. Diese Verfahren liefern für gut texturierte Oberflächen gute Ergebnisse, scheitern aber bei gleichfarbigen, merkmalsarmen Oberflächen sowie bei komplizierteren Verschneidungen und spiegelnden Objekten.

Bei sogenannten *Virtual-Reality-* bzw. *Augmented-Reality-Anwendungen*, die auch von Mobiltelefonen (Smartphones) ausgeführt werden können, existieren darüber hinaus Lösungen, die ähnlich zum SLAM-Verfahren bzw. photogrammetrischen Verfahren funktionieren. Hierbei werden in Echtzeit erfasste Bildfolgen der Smartphone-Kameras analysiert, um darin Umgebungsmerkmale im Zeitverlauf zu verfolgen, in der Regel unterstützt durch Messdaten der ebenfalls in Smartphones verbauten IMUs, so dass hieraus eine grobe Erfassung der Umgebung sowie der Bewegung des Smartphones im Raum in Echtzeit abgeleitet werden kann, was dann zum Beispiel die passgenaue Einblendung virtueller Objekte in das Kamerasucherbild ermöglicht.

Für kleinere Räume und kurze Entfernungen eignen sich auch sogenannte "*Structured Light*"-Lösungen, bei denen vom Erfassungssystem aus (Infrarot-)Punktmuster abgestrahlt werden, deren Verzerrung im Kamerabild Rückschlüsse auf die 3D-Struktur der erfassten Szene liefert.

Ferner sind sogenannte Time-of-Flight-Kameras bekannt, die ähnlich wie ein parallel arbeitender Laserscanner einen Lichtblitz aussenden und für jedes Pixel des Kamerasensors sehr präzise den individuellen Zeitpunkt bestimmen, an dem das Reflexionssignal erfasst wird, so dass sich über die Lichtlaufzeit hieraus eine Entfernungsinformation für das betreffende Pixel ergibt. Aufgrund der geringen Auflösung und der begrenzten Reichweite und Präzision eignen sich diese Systeme jedoch nicht für die detaillierte Erfassung großer Gebäude.

Gleiches gilt für Stereo-Tiefenkameras, die ähnlich dem menschlichen Auge aus der Parallaxeninformation zweier Kamerabilder Tiefeninformationen gewinnen. Auch hier ist die Präzision und Auflösung für Vermessungs-Anwendungen ungenügend.

Für hochpräzise Erfassungssysteme, mit denen größere Gebäude bis auf wenige Millimeter genau gescannt werden sollen (z.B. trolley-basierten Mobile-Mapping-Systemen), eignen sich daher insbesondere Laserscanner.

Bei diesen Mobile-Mapping-Systemen kann die Echtzeit-Visualisierung des Erfassungsvorgangsvorgangs und der Bewegung im Raum auf einem Bediener-Bildschirm dann besonders einfach, robust und schnell erfolgen, wenn - wie im obigen Beispiel dargestellt - ein 2D-Laserscanner in einer während der Bewegung konstant bleibenden Ebene scannt, das heißt sich das Erfassungssystem auch in einer hierzu parallelen 2D-Ebene bewegt, wie dies in Gebäuden mit ebenen Böden in den Räumen und Gängen der Fall ist. In diesem Fall spricht man auch von 2D-SLAM bzw. Realtime-2D-SLAM mit drei Freiheitsgraden (3 DoF, "*Degrees of Freedom*") (das heißt 2 Raumachsen X-Y und eine Drehachse - "Gieren"/"*yaw*")**.**

Da der vorgenannte für das 2D-SLAM-Verfahren ausgerichtete Laserscanner während der Bewegung durch den Raum horizontal ausgerichtet ist und immer dieselbe konstante Ebene scannt und den Raum selbst nicht flächendeckend erfasst, kommen für die Erfassung der eigentlichen Punktwolke daher weitere 2D-Laserscanner zum Einsatz, die in anderen Ebenen angeordnet sind, so dass durch die Fortbewegung des Erfassungssystems diese Scan-Ebenen den Raum gleichmäßig überstreichen, damit die Umgebung möglichst gleichmäßig und vollständig gescannt und erfasst wird.

Bei der Erfassung großer Gebäude ist es wünschenswert, möglichst große Flächen in einem durchgehenden Scan-Vorgang ohne Unterbrechung zu erfassen, um den Aufwand für die sogenannte Registrierung, das heißt das Zusammenfügen von Teil-Punktwolkenmodellen aus einzelnen Teil-Scanvorgängen zu einem Gesamt-Punktwolkenmodel durch exaktes Ausrichten und Abgleichen der Überlappungsbereiche der Teil-Punktwolken, möglichst gering zu halten. Dieser Registrierungsvorgang ist zwar prinzipiell algorithmisch möglich, kann aber je nach Größe der Teilmodelle rechenintensiv sein und trotzdem manuelle Vor- oder Nachjustierung erfordern.

Trolley-basierte Mobile-Mapping-Systeme, die mit 2D-SLAM-Verfahren arbeiten, erfordern hierbei bislang in der Regel ein Beenden des aktuellen Scan-Vorgangs und das Starten eines neuen Scan-Vorgangs, sobald zum Beispiel eine größere Stufe, steilere Rampe oder gar Treppe zu überwinden ist, auch wenn einzelne Systeme zum Beispiel durch Auswertung von IMU-Daten in der Lage sind, Rampen mit geringen Steigungen zu verarbeiten oder Störungen durch Holperschwellen, überfahrene Kabel etc. durch Korrektur-Algorithmen auszugleichen.

Des Weiteren sind Erfassungssysteme mit sechs Freiheitsgraden (6 DoF, *Degrees of Freedom)* (das heißt drei Raumrichtungen X-Y-Z und drei Drehrichtungen ("Rollen-Nicken-Gieren" / "*rollpitch-yaw*" / 6DoF-SLAM-Verfahren) bekannt.

Beispielsweise beschreibt die Veröffentlichung George Vosselman, "DESIGN OF AN INDOOR MAPPING SYSTEM USING THREE 2D LASER SCANNERS AND 6 DOF SLAM", ISPRS Annals of the Photogrammetry, Remote Sensing and Spatial Information Sciences, Volume !!-3, 2014. ISPRS Technical Commission III Symposium, 5.-7. September 2014, Zurich, Switzerland. 10.5194/isprsannals-II-3-173-2014 (https://www.isprs-ann-photogramm-remote-sens-spatial-inf-sci.net/II-3/173/2014/isprsannals-II-3-173-2014.pdf) ein Verfahren zum Erfassen eines Objektraums innerhalb eines Gebäudes. Dabei werden mehrere Ein-Ebenen-Scanner eingesetzt, deren Scanebenen nicht parallel zueinander angeordnet sind. Die Verarbeitung der bei diesem System erfassten Daten ist jedoch algorithmisch sehr aufwendig, so dass sich dieses Verfahren nicht zur Echtzeitvisualisierung des Scanvorgangs, sondern nur für eine Berechnung eines Punktwolkenmodells in der Nachverarbeitung eignet. Außerdem ist aus der EP 3 228 985 A1 ein Erfassungssystem in sechs Freiheitsgraden mit 3D-SLAM-Verfahren bekannt.

Verschiedene Laserscanner sind aus der DE 10 2011 121 115 B4 oder der DE 10 2004 050 682 A1 bekannt. Ferner ist aus der EP 2 388 615 A1 und der US 2017/0269215 A1 ein Mehrfachscanner bekannt, welcher Signalstrahlen fächerförmig emittiert und die Reflexionen dieser Signalstrahlen misst.

Trolley-basierte Systeme können insbesondere dann eingesetzt werden, wenn das zu erfassende Gebäude einen ebenen Untergrund aufweist, so dass das Trolley-basierte System über den Untergrund gerollt werden kann. In Gebäuden mit einem unebenen Untergrund oder in Gebäuden mit sehr vielen Treppen, Stufen, steilen Rampen oder Verschachtelungen, in denen ein Trolley-basiertes System nicht über längere Strecken geschoben werden kann und häufig aufgrund eines Höhenversatzes neu justiert werden müsste, sind tragbare Systeme in Rucksackform oder in der Hand gehaltene Systeme in unterschiedlichen Bauformen bekannt. Solche Systeme unterliegen Gewichtsrestriktionen. Das Gewicht muss so gering sein, dass das System noch von einer Person getragen oder in der Hand gehalten werden kann. Außerdem müssen die Scaneinrichtungen so ausgelegt sein, dass trotz der Bewegungen, die eine Person mit der Scaneinrichtung ausführt, verwacklungsfreie, scharfe Aufnahmen generiert werden können.

Aus der US 6,141,034 ist eine Raumerfassungsvorrichtung bekannt, welche eine Scaneinrichtung und ein Gestell umfasst, welches auf den Schultern einer Person oder mittels eines Rollstuhls getragen werden kann.

US 8 941 777 B1 offenbart ein Tragegestell für eine Panorama-Kamera zum Tragen auf dem Rücken einer Person, wobei das Tragegestell eine Sensorhalterung, eine Schulterauflage und eine Hüfthalterung umfasst.

Der Erfindung liegt die Aufgabe zugrunde, ein Gestell und eine Raumerfassungsvorrichtung der eingangs genannten Art bereitzustellen, welche es ermöglichen, dass die Scaneinrichtung von einer Person durch ein Gebäude getragen werden kann, wobei bei der Bewegung durch das Gebäude der Raum erfasst werden kann. Dabei soll eine besonders gute Handhabbarkeit des Gestells durch die Person, welche das Gestell trägt, gewährleistet sein.

Erfindungsgemäß wird diese Aufgabe durch ein Gestell mit den Merkmalen des Anspruchs 1 und eine Raumerfassungsvorrichtung mit den Merkmalen des Anspruchs 6 gelöst. Vorteilhafte Ausgestaltungen und Weiterbildungen ergeben sich aus den abhängigen Ansprüchen.

Das erfindungsgemäße Gestell ist dadurch gekennzeichnet, dass die Hüftauflage mit einem Anlegeteil so zusammenwirkt, dass das Anlegeteil um eine erste Achse, die parallel zu einer länglichen Querkante des Anlegeteil ausgerichtet ist, schwenkbar ist, wenn die längliche Querkante des Anlegeteils auf der Hüftauflage aufliegt, ein Schwenken um eine zur ersten Achse senkrechte Achse jedoch behindert ist, so dass das Anlegeteil bezüglich der Hüftauflage um nur eine Achse schwenkbar ist.

Das erfindungsgemäße Gestell kann vorteilhafterweise am Körper der Person, welche mittels des Gestells die Scaneinrichtung trägt, zumindest an zwei Stellen abgestützt werden: Zum einen erfolgt eine Abstützung über die Schulterauflage, welche auf den Schultern der Person aufliegt. Zum anderen kann über das Anlegeteil eine Abstützung im Bereich der Hüfte der Person erfolgen. Auf diese Weise kann sowohl das Gewicht des Gestells mit den daran befestigten Einrichtungen getragen werden. Ferner kann das Gestell hinsichtlich seiner räumlichen Ausrichtung stabilisiert werden. Dies ermöglicht eine besonders gute Handhabung des Gestells beim Aufsetzen und beim Bewegen der Person in einem Raum, während mit einer an dem Gestell befestigten Scaneinrichtung z. B. der Raum eines Gebäudes erfasst wird.

Mit der erfindungsgemäßen Raum Erfassungsvorrichtung lassen sich insbesondere unwegsame Gebäude oder Gelände wie z.B. Baustellen oder andere Außengelände und Umgebungen wie zum Beispiel Höhlen erfassen.

Gemäß einer Ausgestaltung des erfindungsgemäßen Gestells ist der Ausleger vor der Person angeordnet, wenn die Person das Gestell mittels der Trageeinrichtung trägt. Hierdurch wird die Bedienbarkeit einer an dem Gestell befestigten Scaneinrichtung sowie etwaiger weiterer Einrichtungen verbessert. Gleichzeitig wird das Risiko verringert, dass die Person, die das Gestell trägt und sich bewegt, mit dem Gestell an andere Objekte im Raum anstößt. Die Person sieht die Ausmaße des vor dem Körper getragenen Gestells und kann daher auch bei Drehbewegungen besser abschätzen, ob das Gestell möglicherweise mit anderen Objekten kollidieren wird.

Gemäß einer Ausgestaltung des erfindungsgemäßen Gestells sind zwei Ausleger vorgesehen, wobei sich ein Ausleger von dem Anlegeteil zu einer ersten Schulterauflage und der andere Ausleger von dem Anlegeteil zu einer zweiten Schulterauflage erstreckt. Ferner kann auch der obere Gestellabschnitt zweigeteilt sein: von der ersten Schulterauflage erstreckt sich ein erster obere Gestellabschnitt zur ersten Halterung und von der zweiten Schulterauflage erstreckt sich ein zweiter obere Gestellabschnitt zu ersten Halterung. Die Person, welche das Gestell trägt, kann dann zwischen den Auslegern bzw. den oberen Gestellabschnitten hindurchschauen.

Gemäß einer Weiterbildung des erfindungsgemäßen Gestells ist dieses so ausgebildet, dass es zusätzlich auch rucksackartig auf dem Rücken getragen werden kann. Beispielsweise kann die Person das Gestell zu Transportzwecken, bei denen mittels der Scaneinrichtung der Raum nicht erfasst werden soll, auf dem Rücken getragen werden.

Gemäß einer Weiterbildung des erfindungsgemäßen Gestells weist dieses ein mittleres Gelenk zum Zusammenklappen des Gestells auf. Hierdurch kann vorteilhafterweise das Gestell zu Transportzwecken verkleinert werden. Bei dem Gestell ist es jedoch besonders wichtig, dass die räumlichen Beziehungen von Einrichtungen, die an dem Gestell befestigt sind, sehr exakt erhalten bleiben. Bevorzugt weist daher das mittlere Gelenk zumindest zwei Rastpositionen auf: Eine Rastposition für einen zusammengeklappten Zustand des Gestells, und eine andere Rastposition für einen Betriebszustand des Gestells. Auf diese Weise kann sichergestellt werden, dass insbesondere im Betriebszustand des Gestells die räumlichen Beziehungen von an dem Gestell befestigten Einrichtungen immer exakt dieselben sind.

Das Gelenk ist dabei insbesondere so ausgelegt, dass eine Kalibrierung zwischen mehreren Scaneinrichtungen, die an dem Gestell befestigt sind, nach einem Zusammenklappen und Wiederaufklappen des Gestells erhalten bleibt. Nach dem Zusammenklappen und Wiederaufklappen müssen die Scaneinrichtungen nicht erneut kalibriert werden. Das Gelenk ist hierfür insbesondere besonders torsionssteif.

Gemäß einer Ausgestaltung des erfindungsgemäßen Gestells kann dieses alternativ oder zusätzlich auseinandergenommen und wieder zusammengesteckt werden. Auch in diesem Fall ist die Steckverbindung so ausgestaltet, dass nach dem Auseinandernehmen und Wiederzusammenstecken keine erneute Kalibrierung von Scaneinrichtungen erforderlich ist.

Gemäß des erfindungsgemäßen Gestells umfasst die Trageeinrichtung ferner eine Hüftauflage, welche mit dem Anlegeteil korrespondiert. Das Anlegeteil lässt sich insbesondere so auf die Hüftauflage auflegen, dass über die Hüftauflage das Gewicht des Gestells und der daran befestigten Einrichtungen zumindest zum Teil, bevorzugt überwiegend, aufgenommen werden kann. Hierfür weist die Hüftauflage insbesondere eine nach oben gerichtete Auflage auf, auf welcher sich das Anlegeteil abstützen kann. Die Hüftauflage kann wiederum auf einem Hüftgurt oder einem Gürtel der Person, welche das Gestell trägt, abgestützt werden. Vorteilhafterweise kann hierdurch das Gewicht des Gestells und der darin befestigten Einrichtungen auf die Schultern und die Hüfte der Person, welche das Gestell trägt, verteilt werden.

Die Hüftauflage wirkt mit dem Anlegeteil erfindungsgemäß so zusammen, dass das Anlegeteil um eine erste Achse schwenkbar ist, wenn es auf der Hüftauflage aufliegt, ein Schwenken um eine zur ersten Achse senkrechte Achse jedoch behindert ist. Die erste Achse ist insbesondere eine Querachse, die quer zur Bewegungsrichtung der Person ausgerichtet ist, wenn diese das Gestell trägt und damit vorwärts geht. Die Wechselwirkung der Hüftauflage mit dem Anlegeteil sorgt somit dafür, dass sich das Gestell nur um die Querachse nach vorne kippen lässt, wenn das Gestell mit einem nach vorn ausgerichteten Ausleger von der Person getragen wird. Ein seitliches Kippen des Gestells wird durch das Anlegeteil behindert. Die Schwenkbarkeit des Anlegeteils bezüglich der Hüftauflage um nur eine Achse führt vorteilhafterweise zu einem robusteren Aufbau des Gestells. Bei einem Einsatz des Gestells mit einer Scaneinrichtung führt dies zu schärferen Bildaufnahmen und einer genaueren Erfassung des Objektraums.

Ferner kann die Hüftauflage so ausgebildet sein, dass auch Drehungen des Gestells relativ zu der Hüftauflage um eine vertikale Achse behindert, vorzugsweise verhindert, werden.

Hierfür weist das Anlegeteil beispielsweise eine längliche Querkante auf, mit welcher es auf der Hüftauflage aufliegt. Die erste Achse ist dann parallel zur Querkante des Anlegeteils ausgerichtet. Das Anlegeteil weist insbesondere eine Platte auf, bei welcher die längliche Querkante gebildet ist. Die Platte lässt sich insbesondere in die Hüftauflage von oben einführen. Dort liegt sie auf der Hüftauflage auf und lässt sich um die längliche Querkante nach vorne kippen.

Ferner kann die Hüftauflage Vertikalwangen aufweisen, welche ein Schwenken des auf der Hüftauflage aufliegenden Anlegeteils um eine zur ersten Achse senkrechten Achse behindern. Das Anlegeteil ist somit insbesondere so in die Hüftauflage eingesteckt, dass ein Schwenken nach vorne möglich ist; ein Schwenken in Querrichtung zur Seite und/oder eine Drehung um eine vertikale Achse relativ zu der Hüftauflage jedoch von den Vertikalwangen verhindert wird.

Durch die Wechselwirkung des Anlegeteils mit der Hüftauflage werden die Freiheitsgrade, um welche das Gestell, wenn es von einer Person mittels der Trageeinrichtung getragen wird, eingeschränkt. Hierdurch wird das Gestell an der Person stabilisiert. Die Möglichkeit, das Gestell nach vorne zu schwenken bzw. zu kippen ist insbesondere dann vorteilhaft, wenn das Gestell zu hoch ist, um sich in einem Raum zu bewegen. In diesem Fall muss das Gestell nicht vollständig abgenommen werden; es ist vielmehr möglich, das Gestell um eine definierte Achse nach vorne zu schwenken und anschließend wieder um die definierte Achse zurückzuschwenken. Auf diese Weise kann die Person beispielsweise einen niedrigen Durchgang passieren, an welchem das Gestell, welches von der Person getragen wird, anstoßen würde. Die Ausrichtung des Gestells zu der Person bleibt dabei erhalten, insbesondere in Bezug auf eine etwaige Drehbewegung um eine Vertikalachse, welche auf der ersten Achse senkrecht steht.

Gemäß einer Weiterbildung des erfindungsgemäßen Gestells weist die Schulterauflage einen gebogenen Abschnitt mit einem oberen Scheitelpunkt auf. Der gebogene Abschnitt geht auf einer Seite des Scheitelpunkts in den Ausleger über. Auf der anderen Seite weist der gebogene Abschnitt am Ende einen Abstand vom Scheitelpunkt in Längsrichtung des Gestells auf, der in einem Bereich von 50 mm bis 100 mm liegt. Die Längsrichtung des Gestells ist dabei die Vertikalrichtung, wenn das Gestell von einer Person getragen wird. Auf diese Weise liegt der gebogene Abschnitt auf der Schulter der Person auf und umschließt diese nach hinten unten in einem gewissen Bereich. Der gebogene Abschnitt ragt jedoch nach hinten bei der Schulter so wenig hinunter, dass es für die Person durch geringfügiges Absenken des Schulter möglich ist, das Gestell nach vorne um die längliche Querkante des Anlegeteils zu schwenken. In der normalen Stellung der Schulter wird ein Kippen nach vorne jedoch durch den gebogenen Abschnitt verhindert, da er nach hinten unterhalb des Scheitelpunktes endet. Vorteilhafterweise kann das Gestell hierdurch zumindest zum Teil auf den Schultern einer Person getragen werden, gleichzeitig jedoch durch einfaches Absenken der Schultern so von diesen gelöst werden, dass es nach vorne um die Querkante des Anlegeteils, welches auf der Hüftauflage aufliegt, gekippt werden kann.

Bei dem erfindungsgemäßen Gestell befindet sich das Anlegeteil in der Höhe des Bereichs der Hüfte der Person, wenn die Person das Gestell mittels der Trageeinrichtung trägt. Unter der Höhe des Bereichs der Hüfte einer Person wird im Sinne der Erfindung ein vertikaler Bereich verstanden, der sich von der Höhe des Schritts der Person bis zu den unteren Rippen erstreckt.

Für das Gestell ist hierbei der Abstand des Bereichs der Hüfte der Person von der Höhe der Schultern relevant. Dieser Abstand kann anhand üblicher Maße von Personen bestimmt werden, welche in der Lage sind, das Gestell zu tragen.

In Längsrichtung des Gestells, d. h. in einer Vertikalrichtung, wenn das Gestell von einer Person getragen wird, liegt der Abstand zwischen der Schulterauflage, insbesondere dem Scheitelpunkt, und dem Anlegeteil, insbesondere der Querkante, in einem Bereich von 400 mm bis 800 mm, insbesondere in einem Bereich von 500 mm bis 700 mm. Bevorzugt ist der Ausleger und/oder das Anlegeteil höhenverstellbar, d. h. der vorstehende Abstand lässt sich einstellen. Ferner kann auch sowohl der Ausleger als auch das Anlegeteil höhenverstellbar sein, so dass der Abstand zwischen der Schulterauflage und dem Anlegeteil an die Person angepasst werden kann, welche das Gestell tragen soll. Nach einer Höhenverstellung des Auslegers müssten allerdings die später beschriebenen Mehrfachscanner neu zueinander kalibriert werden.

Gemäß einer weiteren Ausgestaltung des erfindungsgemäßen Gestells ist in Längsrichtung des Gestells zwischen der Schulterauflage, insbesondere dem Scheitelpunkt, und der ersten Halterung, insbesondere einer unteren Kante der ersten Halterung, ein Abstand in einem Bereich von 300 mm bis 500 mm, insbesondere in einem Bereich von 350 mm bis 400 mm gebildet. In diesem Bereich ist beim Tragen des Gestells der Kopf der Person angeordnet. Der Abstand zwischen der ersten Halterung und der Schulterauflage sollte so gewählt sein, dass die Person, welche das Gestell trägt, noch einen Helm tragen kann. Der Kopf der Person ist somit auch beim Tragen des Gestells so frei, dass ein ungehinderter Blick zumindest nach vorne gewährleistet ist. Ferner ist es aus Sicherheitsgründen möglich, einen Helm zu tragen.

Gemäß einer weiteren Ausgestaltung des Gestells ist bei dem Ausleger eine zweite Halterung angeordnet, an welcher eine weitere Scaneinrichtung befestigbar ist, wobei sich die zweite Halterung vor der Person befindet, wenn die Person das Gestell mittels der Trageeinrichtung trägt. Das Gestell ist in diesem Fall somit für die Befestigung mehrerer Scaneinrichtungen ausgelegt. Die Anordnung der weiteren Scaneinrichtung vor der Person, welche das Gestell trägt, führt zu einer besseren Handhabbarkeit des Scaneinrichtung sowie einer besseren Gewichtsverteilung. Die zweite Halterung ist insbesondere starr an dem Gestell befestigt und somit auch starr zu der ersten Halterung.

Die Erfindung betrifft des Weiteren eine Raumerfassungsvorrichtung mit zumindest einer Scaneinrichtung und dem erfindungsgemäßen Gestell, wie es vorstehend angegeben wurde.

Die Raumerfassungsvorrichtung lässt sich auf diese Weise sehr gut von einer Person tragen. Ferner ergibt sich eine verbesserte Handhabung der Raumerfassungsvorrichtung dadurch, dass das Gestell sehr einfach nach vorne geschwenkt werden kann, um beispielsweise durch Türen und Engstellen zu manövrieren, während sich die Person mit der Raumerfassungsvorrichtung durch ein Gebäude bewegt. Mit der erfindungsgemäßen Raumerfassungsvorrichtung lassen sich somit insbesondere unwegsame Gebäude oder Gelände wie z.B. Baustellen oder anderer Außengelände und Umgebungen, wie zum Beispiel Höhlen, erfassen.

Gemäß einer Ausgestaltung der erfindungsgemäßen Raumerfassungsvorrichtung ist die Scaneinrichtung ein erster Mehrfachscanner. Der erste Mehrfachscanner ist an der ersten Halterung des Gestells oberhalb des Kopfes der Person befestigt, wenn die Person die Raumerfassungsvorrichtung mittels des Gestells trägt.

Der erste Mehrfachscanner umfasst insbesondere eine Vielzahl von in einem Bauteil integrierten Emissionseinheiten zum Erzeugen einer Vielzahl von Signalstrahlen in definierten Emissionsrichtungen, einen Empfänger zum Detektieren von Reflexionsstrahlungen, die durch Reflexionen der Signalstrahlen an einem oder mehreren Objekten des Objektraums erzeugt werden, und eine Abtasteinrichtung zum Verändern der Emissionsrichtungen der Signalstrahlen. Der Einsatz des Mehrfachscanners ermöglicht das unterbrechungsfreie Erfassen des Objektraums. Durch die Verwendung des Mehrfachscanners kann nämlich ein Echtzeit-3D-SLAM-Verfahren mit sechs Freiheitsgraden eingesetzt werden. Es ist nicht erforderlich, den Erfassungsvorgang in Teilvorgänge zu unterteilen und diese Teilvorgänge in der Nachverarbeitung wieder zusammenzusetzen.

Aus der Verwendung des Mehrfachscanners in der erfindungsgemäßen Raumerfassungsvorrichtung ergibt sich der Vorteil, dass die Vorrichtung in der Bewegung immer nicht nur neue Oberflächenabschnitte des Objektraums erfasst, indem die Signalstrahlen diese Oberflächenabschnitte überstreichen, sondern dass die Signalstrahlen immer auch auf bereits zuvor erfasste Oberflächenabschnitte treffen, das heißt solche Oberflächenabschnitte, die bereits von zuvor ausgesandten anderen Signalstrahlen erfasst wurden. Hierdurch wird es möglich, einen Abgleich der von dem Empfänger detektierten Reflexionsstrahlungen mit bereits zuvor detektierten Reflexionsstrahlungen durchzuführen. Aus diesem Abgleich kann dann die Bewegung der Raumerfassungsvorrichtung berechnet werden, so dass es möglich ist, die Position der Raumerfassungsvorrichtung im Objektraum zu bestimmen. Hierdurch ist es wiederum möglich, eine graphische Darstellung derjenigen Bereiche des Objektraums zu erzeugen und auszugeben, durch welche die Raumerfassungsvorrichtung bewegt wurde. Hieraus wiederum lässt sich anhand einer vorläufigen Modellierung des Objektraums anhand der Daten, die zumindest aus den Reflexionsstrahlungen gewonnen werden können, bestimmen, durch welche Bereiche im Objektraum die Raumerfassungsvorrichtung bewegt werden kann. Diese möglichen Bewegungen der Vorrichtung im Objektraum können außerdem graphisch dargestellt und ausgegeben werden.

Aus der Anordnung des ersten Mehrfachscanners oberhalb des Kopfes der Person ergibt sich der Vorteil, dass der Objektraum in etwa aus einer für eine Person natürlichen Betrachtungshöhe erfasst wird. Gleichzeitig ergeben sich keine Abschattungen durch die Person, welche den ersten Mehrfachscanner mittels des Gestells trägt, so dass eine Rundumerfassung von einer vertikalen Position oberhalb des Kopfes der Person möglich ist.

Der erste Mehrfachscanner ist insbesondere so ausgerichtet, dass die gescannte Mittelebene des ersten Mehrfachscanners einen ersten Winkel mit einer Horizontalebene einschließt, der in einem Bereich von 5° bis 20°, insbesondere in einem Bereich von 8° bis 12°, liegt, wenn die Person die Raumerfassungsvorrichtung mittels des Gestells trägt. Bevorzugt ist der Winkel 10°. Die Mittelebene des ersten Mehrfachscanners ist somit insbesondere im Wesentlichen horizontal ausgerichtet, ggf. etwas nach vorne gekippt.

Die Emissionsrichtungen des ersten Mehrfachscanners sind insbesondere fächerförmig, so dass ein Emissionsfächer mit einer Mittelachse gebildet ist. Der Mehrfachscanner ist insbesondere so an dem Gestell montiert, dass die von dem Emissionsfächer gebildete Ebene vertikal ausgerichtet ist. Der Öffnungswinkel des Emissionsfächers kann dabei insbesondere in einem Bereich von 25° bis 35° liegen. Bevorzugt ist der Öffnungswinkel 30°.

Bei den Emissionseinheiten des Mehrfachscanners handelt es sich insbesondere um einen oder mehrere Laser. Die Signalstrahlen können dabei durch mehrere Laser simultan, fächerförmig in die Emissionsrichtungen emittiert werden. Bevorzugt werden jedoch nacheinander Laserpulse (Signalpulse) in die Emissionsrichtungen emittiert, so dass sich nur bei einer Betrachtung eines bestimmten Zeitintervalls die fächerförmige Emission der Signalstrahlen in den Emissionsrichtungen ergibt. Die Laserpulse in den Emissionsrichtungen können dabei von einem Laser emittiert werden, dessen Emissionsrichtung verändert wird. Bevorzugt werden jedoch mehrere Laser verwendet, die nacheinander Pulse in verschiedene Emissionsrichtungen emittieren. Die Abstände der Pulse können dabei so gewählt werden, dass die Reflexion des Laserpulses erfasst wird, bevor der nächste Laserpuls ausgesendet wird. Somit hängt der Zeitabstand zwischen den Laserpulsen von der Reichweite ab, die von den Signalstrahlen zur Erfassung des Objektraums erreicht werden soll.

Die Abtasteinrichtung ist insbesondere ausgebildet, die Emissionsrichtungen der Signalstrahlen um eine Rotationsachse zu drehen. Der erste Mehrfachscanner tastet somit das Volumen des Rotationskörpers eines Fächers ab. Gemäß einer bevorzugten Ausgestaltung ist der erste Mehrfachscanner dabei so an dem Gestell montiert, dass die Rotationsachse um einen Winkel gegenüber der Vertikalen geneigt ist, der insbesondere in einem Bereich von 5° bis 20°, vorteilhafterweise in einem Bereich von 8° bis 12° liegt, wenn die Person die Raumerfassungsvorrichtung mittels des Gestells trägt. Bevorzugt ist dieser Winkel 10°. Hierdurch wird erreicht, dass in der Richtung, in welcher die Rotationsachse gekippt ist, nähere Oberflächenabschnitte des Bodens erfasst werden können, auf welchem sich die Person, welche die Raumerfassungsvorrichtung trägt, bewegt. In der entgegengesetzten Richtung wird die fächerförmige Emission hingegen nach oben gekippt, so dass weniger Bereiche unterhalb des ersten Mehrfachscanners bestrahlt werden.

Die Rotationsachse des ersten Mehrfachscanners ist somit insbesondere hinsichtlich einer Bewegungsrichtung der Raumerfassungsvorrichtung nach vorne gekippt. Das Kippen der Rotationsachse ist ferner vorteilhaft für das Echtzeit-3D-SLAM-Verfahren. Es werden in diesem Fall nämlich nicht nur exakt horizontal zur Bewegungsrichtung verlaufende Schnitte durch den Objektraum zur Echtzeitvisualisierung geliefert, sondern quer zur Bewegungsrichtung verlaufende Schnitte.

Hierdurch werden einerseits die für das SLAM-Verfahren notwendigen Informationen noch erfasst, das heißt es können wiederkehrende Merkmale der Umgebung, die in aufeinanderfolgenden Rotationsdurchgängen des insbesondere als Laserscanner ausgebildeten Mehrfachscanners erfasst werden, erkannt werden. So könnte z.B. ein Umgebungsmerkmal, das in einem Rotationsdurchgang in einer ersten Scanebene des Mehrfachscanners erfasst wurde, im darauffolgenden Rotationsdurchgang im Erfassungs-Datensatz der nächsten oder übernächsten Ebene des Scanners wieder auftauchen.

Andererseits werden so auch schnell große Raumbereiche zum Zweck der 3D-Visualisierung für den Bediener erfasst, darunter vor allem nahegelegene Merkmale des Bodens vor der Raumerfassungsvorrichtung und weiter entfernte Merkmale der Decke hinter der Raumerfassungsvorrichtung. Es wird insbesondere eine Visualisierung der erfassten Umgebung in 3D ermöglicht, und zwar in einer Darstellung, die mehr Details liefert als eine Mehrfach-Scheiben-Linien-Schnitt-Darstellung, welche bevorzugt dann zur Anwendung kommt, wenn es um schnelle Erfassung großer Raumbereiche in Echtzeit, insbesondere mit hoher Reichweite nach vorne in Fahrtrichtung geht, wie es z.B. beim autonomen Fahren relevant ist.

Gemäß einer Weiterbildung der erfindungsgemäßen Raumerfassungsvorrichtung ist an der ersten Halterung des Gestells ferner zumindest eine Kamera befestigt, und zwar oberhalb des Kopfes der Person, wenn diese Person die Raumerfassungsvorrichtung mittels des Gestells trägt. Bevorzugt sind mehrere Kameras an der ersten Halterung des Gestells oberhalb des Kopfes der Person befestigt.

Die an der ersten Halterung des Gestells montierte Kamera bzw. die Kameras sind insbesondere ausgebildet, Kamerabilder zumindest eines Teils des Objektraums aufzunehmen. Die von der Kamera oder den Kameras aufgenommenen Bilder können beim Erzeugen der verschiedenen graphischen Darstellungen des Objektraums in Echtzeit berücksichtigt werden. Auf diese Weise kann eine sehr realitätsnahe Darstellung des begangenen und/oder begehbaren Bereichs des Objektraums oder des von der Raumerfassungsvorrichtung bereits abgetasteten Bereichs des Objektraums in Echtzeit erzeugt werden.

Der Aufnahmewinkel der Kamera oder der Kameras in einer Vertikalebene liegt in einem Bereich von 170° bis 210°, insbesondere in einem Bereich von 180° bis 200°, wobei sich die Person überwiegend außerhalb des Aufnahmewinkels, insbesondere vollständig außerhalb des Aufnahmewinkels, der Kamera bzw. der Kameras befindet, wenn die Person die Raumerfassungsvorrichtung mittels des Gestells trägt. Bevorzugt ist der Winkel 195°. Die Kamera bzw. die Kameras ermöglichen somit eine im Wesentlichen vollständige Erfassung des Raumbereichs vor der Person, insbesondere um die Person herum, wobei die Kamera oder die Kameras so angeordnet sind, dass die Person, welche die Raumerfassungsvorrichtung trägt, überwiegend außerhalb des Aufnahmebereichs, insbesondere vollständig außerhalb des Aufnahmewinkels, der Kamera bzw. der Kameras ist.

Werden mehrere Kameras eingesetzt, sind diese insbesondere beabstandet auf einem Ring, insbesondere einem Kreisring, angeordnet, wobei der Ring, insbesondere der Kreisring, im Wesentlichen horizontal ausgerichtet ist, wenn die Person die Raumerfassungsvorrichtung mittels des Gestells trägt. Die Kameras sind insbesondere auf einem regelmäßigen horizontal ausgerichteten Fünfeck angeordnet.

Der horizontale Abstand der Kameras ist dabei insbesondere so gering wie möglich gewählt, so dass der von den Kameras erfasste Raum in der Umgebung der Person, welche die Raumerfassungsvorrichtung trägt, in unmittelbarer Umgebung der Person so groß wie möglich ist, wobei sich die Person jedoch überwiegend außerhalb des Aufnahmewinkels, insbesondere vollständig außerhalb des Aufnahmewinkels, der Kameras befindet, wenn die Person die Raumerfassungsvorrichtung mittels des Gestells trägt. Vorteilhafterweise ist in diesem Fall eine Rundumaufnahme mittels der Kameras möglich, welche jedoch den Raumbereich, in welchem sich die Person, welche die Raumerfassungsvorrichtung trägt, befindet, ausspart.

In Längsrichtung des Gestells ist der Abstand zwischen der Schulterauflage und den Kameras insbesondere in einem Bereich von 300 mm bis 500 mm, insbesondere in einem Bereich von 350 mm bis 400 mm.

Der erste Mehrfachscanner ist insbesondere oberhalb der Kamera oder der Kameras angeordnet. In Längsrichtung des Gestells ist der Abstand zwischen dem ersten Mehrfachscanner, insbesondere dem Austrittspunkt der Emissionsstrahlung, insbesondere des mittleren Strahls des Emissionsfächers, und der Kamera bzw. den Kameras, insbesondere in der Mitte eines Objektivs, insbesondere in einem Bereich von 50 mm bis 100 mm, insbesondere in einem Bereich von 60 mm bis 80 mm. Ein möglichst geringer Abstand zwischen dem Mehrfachscanner und den Kameras führt vorteilhafterweise zu einem möglichst geringen Parallaxenfehler zwischen den vom Scanner erfassten Punktwolkendaten und den gleichzeitig von den Kameras erfassten Bilddaten, was bei der Einfärbung der Punktwolkendaten unter Zuhilfenahme von Bilddaten ("Point Cloud Coloring") von Vorteil ist.

Durch diese Anordnung des Mehrfachscanners und der Kameras wird ein praktikabler Kompromiss zwischen zwei gegenläufigen Anforderungen gefunden: Eine möglichst hohe Anordnung der Kameras würde es zwar ermöglichen, dass die "Base-Line", d.h. der Kameraabstand, minimiert wird, wodurch sogenannte Stiching-Artefakte minimiert würden, während gleichzeitig andere Teile des Kopfes oder der Schultern der Person, welche die Raumerfassungvorrichtung trägt, in den erfassten Bildern wegen der größeren Entfernung nur in einem kleineren Winkelbereich sichtbar wäre. Dies würde zu einer optimalen Rundumaufnahme des umgebenden Raums mit minimalen Stitching-Artefakten führen. Bei einer sehr hohen Anordnung der Kameras würde die Raumerfassungsvorrichtung allerdings sehr weit über den Kopf der Person ragen, welche die Raumerfassungsvorrichtung trägt, so dass sich die Person nicht in niedrigen Räumen oder durch Türöffnungen bewegen könnte, ohne die Raumerfassungsvorrichtung nach vorne zu kippen. Ferner könnte die Raumerfassungsvorrichtung in diesem Fall nicht so stabil von einer Person getragen werden. Auch die Auslenkungen bei einer Bewegung der Person in der Höhe der Kameras wären sehr viel größer. Zudem wäre eine zu hohe Aufnahmehöhe der Bilder nachteilhaft, da die daraus erzeugte Panorama-Ansicht nicht der natürlichen Sichthöhe eines Betrachters entspräche.

Die Anordnung der Kameras und des Mehrfachscanners oberhalb des Kopfes ist ferner gegenüber einer Anordnung in Kopfhöhe oder unterhalb des Kopfes der Person, welche die Raumerfassungsvorrichtung trägt, vorteilhaft, da in diesem Fall eine ungestörte Rundumaufnahme möglich ist, und das Sichtfeld der Person nicht beeinträchtigt ist. Der tote Winkel, welcher sich bei den Kameras ergibt, kann minimiert werden, wobei gleichzeitig ein praktikabler Einsatz der Raumerfassungsvorrichtung beim Tragen durch eine Person erhalten bleibt.

Die Anzahl, der Abstand, die Winkelausrichtung, die Positionierung und das Sichtfeld, sowie die Brennweite der Kameras, und ggf. auch des ersten Mehrfachscanners, sind bei der erfindungsgemäßen Raumerfassungseinrichtung so optimiert, dass eine natürliche Aufnahmehöhe, die im Wesentlichen der Sichthöhe eines aufrecht stehenden menschlichen Beobachters der Umgebung entspricht, ermöglicht wird und gleichzeitig die sogenannte Base-Line, d. h. der Kameraabstand, gering gehalten wird, so dass Stiching-Artefakte reduziert werden, während gleichzeitig möglichst exakt nur derjenige Raumbereich unterhalb der Kameras, in welchem sich die Person, welche die Raumerfassungsvorrichtung trägt, befindet, ausgespart wird. Die Anordnung in der Nähe des Kopfes der Person dient dabei gleichzeitig als Schutz gegen versehentliches Anstoßen an Objekte, die oberhalb des Kopfes angeordnet sind.

Gemäß einer Weiterbildung der erfindungsgemäßen Raumerfassungsvorrichtung sind an der ersten Halterung des Gestells ferner zumindest eine Empfangsantenne und/oder eine inertiale Messeinheit oberhalb des Kopfes der Person befestigt, wenn die Person die Raumerfassungsvorrichtung mittels des Gestells trägt. Die Empfangsantenne dient dem Signalempfang von Sendestationen eines drahtlosen lokalen Netzwerks (WLAN/WiFi). Ferner kann eine weitere Empfangsantenne vorgesehen sein, welche dem Signalempfang von Bluetooth-Sendern dient. Die Empfangsantenne oder die Empfangsantennen sind mit einer Signalverarbeitungseinheit gekoppelt. Auf diese Weise können Signale drahtloser lokaler Netzwerke und/oder Bluetooth-Signale mit jeweiliger Empfangsstärke erfasst und gespeichert werden, während sich die Raumerfassungsvorrichtung bewegt. Aus diesen erfassten Signalen kann ein räumliches Profil der ID-Kennungen der Sendestationen (WLAN-/WiFi-SSIDs, Bluetooth-Beacons) und ihrer räumlich variierenden Signalstärken erstellt werden. Dies ist unter dem Begriff WLAN/WiFi- bzw. Bluetooth-"Fingerprinting" bekannt. Das aufgezeichnete Profil aus ID-Kennungen und Empfangsstärken kann der späteren Ortsbestimmung von Mobiltelefonen dienen, welche sich durch den Raum bewegen. Hierbei werden z.B. über eine Indoor-Navigations-App vom Smartphone in Echtzeit ID-Kennungen der Sendestationen erfasst und deren Signalstärken gemessen und z.B. über eine serverbasierte Datenbank mit dem von der Raumerfassungsvorrichtung zuvor aufgezeichneten Profil verglichen, um daraus eine Ortsbestimmung abzuleiten..

Die inertiale Messeinheit (IMU, "Inertial Measurement Unit") kann Beschleunigungssensoren und Drehratensensoren umfassen. Durch die Auswertung der Signale der inertialen Messeinheit kann die Bewegung der Raumerfassungsvorrichtung im Raum, und damit der zeitliche Verlauf der Position im Raum, ermittelt werden.

Gemäß einer Weiterbildung der erfindungsgemäßen Raumerfassungsvorrichtung umfasst das Gestell einen Stoßfänger. In diesem Fall ist insbesondere der erste Mehrfachscanner und/oder die Empfangsantenne und/oder die inertiale Messeinheit von dem Stoßfänger umgeben. Hierdurch werden alle Sensoreinrichtungen geschützt, die oberhalb des Kopfes der Person angeordnet sind, welche die Raumerfassungsvorrichtung trägt.

Gemäß einer Weiterbildung der erfindungsgemäßen Raumerfassungsvorrichtung ist an dem Gestell ein Zustandssensor befestigt, der ausgebildet ist, zu erfassen, wie das Gestell von einer Person getragen wird. Der Zustandssensor kann insbesondere erfassen, ob das Gestell zumindest zum Teil von der Schulterauflage getragen wird, oder ob das Gestell mittels des Anlegeteils und der Hüftauflage nach vorne geschwenkt wurde, und daher so gekippt angeordnet ist, dass es nicht mehr auf den Schultern der Person aufliegt. Der Zustandssensor kann beispielsweise von der inertialen Messeinheit in Verbindung mit einer Auswerteeinrichtung bereitgestellt werden, über welche die Kippbewegung des Gestells beim Wegschwenken von den Schultern der Person erfasst wird. Alternativ kann auch ein Schultersensor vorgesehen sein, der ausgebildet ist, zu erfassen, ob die Schulterauflage auf den Schultern der Person aufliegt. Alternativ oder zusätzlich kann auch ein Hüftsensor vorgesehen sein, der ausgebildet ist, die Ausrichtung des Anlegeteils relativ zur Hüftauflage zu erfassen. Dabei wird insbesondere der vertikale Winkel des Anlegeteils erfasst.

Mittels des Zustandssensors kann beispielsweise die Erfassung des Objektraums unterbrochen werden, wenn erfasst wurde, dass das Gestell nach vorne gekippt wurde, um beispielsweise eine Engstelle oder eine niedrige Türöffnung zu passieren. Diese Zustandsdaten können bei der Verarbeitung der erfassten Scan-Daten z.B. im Post-Processing berücksichtigt werden, so dass Punktwolken-Artefakte, die entstehen können, wenn die Laserscanner beim Abnehmen oder Kippen der Raumerfassungsvorrichtung Körperpartien der Person scannen, in der Verarbeitung der Daten ausgeblendet werden können.

Zusätzlich kann mittels des Zustandssensors auch erfasst werden, ob die Raumerfassungsvorrichtung stabil auf dem Boden abgestellt wurde. Hier könnte beispielsweise zu Energiesparzwecken die Datenerfassung insgesamt automatisch pausieren, wenn über die Zustandssensoren erkannt wird, dass die Raumerfassungsvorrichtung stabil auf dem Boden abgestellt ist, ohne dass hierdurch die Konsistenz der laufenden SLAM-Ortsbestimmung beeinträchtigt würde. Das Abstellen der Raumerfassungsvorrichtung ist insbesondere dann zweckmäßig, wenn diese von einer Bedienperson an eine andere übergeben wird oder wenn beispielsweise sperrige Möbelstücke in einer Umgebung verrückt werden müssen.

Ebenso ist es vorteilhaft, wenn Informationen der Zustandssensoren auch dazu verwendet werden können, um die Dichte und Qualität der erzeugten Punktwolke z.B. durch selektives Verwerfen von Daten insgesamt zu homogenisieren und optimieren, denn beim Abnehmen vom Körper der Bedienperson verändert sich der ansonsten beim normalen Gehen gleichmäßige Erfassungsvorgang hin zu stärkeren Schwankungen hinsichtlich Qualität und Dichte der Punktwolkendaten bedingt durch Stehenbleiben der Bedienperson und Kippen, Drehen oder Wackeln der Raumerfassungsvorrichtung.

Gemäß einer weiteren Ausbildung der erfindungsgemäßen Raumerfassungsvorrichtung ist bei dem Ausleger des Gestells eine zweite Halterung angeordnet, an welcher ein zweiter Mehrfachscanner befestigt ist. Der zweite Mehrfachscanner ist insbesondere so ausgerichtet, dass eine gescannte Mittelebene des zweiten Mehrfachscanners einen Winkel mit einer Vertikalebene einschließt, der in einem Bereich von -10° bis +10°, insbesondere in einem Bereich von -5° bis +5° liegt, wenn die Person die Raumerfassungsvorrichtung mittels des Gestells trägt. Bevorzugt ist der Winkel 0°. Im Gegensatz zu dem ersten Mehrfachscanner ist der zweite Mehrfachscanner somit im Wesentlichen vertikal ausgerichtet. Der von dem zweiten Mehrfachscanner erfasste Öffnungswinkel liegt insbesondere in einem Bereich von 25° bis 35° liegen. Bevorzugt ist der Öffnungswinkel 30°. Bei der erfindungsgemäßen Raumerfassungsvorrichtung ist somit ein Mehrfachscanner im Wesentlichen senkrecht zur Bewegungsrichtung der Person ausgerichtet. Der andere Mehrfachscanner ist im Wesentlichen parallel zur Bewegungsrichtung ausgerichtet. Hierdurch wird erreicht, dass die Umgebung vollständig erfasst werden kann und gleichzeitig ein gutes Echtzeit-SLAM erreicht wird.

Das Gestell ist insbesondere so ausgelegt, dass mehr als 50 % der Gewichtskraft der Raumerfassungsvorrichtung, wenn sie von einer Person mittels der Trageeinrichtung getragen wird, mittels der Hüftauflage getragen wird. Der größte Teil des Gewichts der Raumerfassungsvorrichtung wird somit über Hüftauflage getragen. Durch die Schulterauflagen wird die Raumerfassungsvorrichtung insbesondere gegen Verdrehungen stabilisiert.

Des Weiteren ist das Gestell insbesondere so ausgebildet, dass es Aufsetzpunkte definiert, auf welchen die Raumerfassungsvorrichtung auf einer Horizontalebene so frei liegen kann, dass der erste Mehrfachscanner und/oder der zweite Mehrfachscanner und/oder die Kameras die Horizontalebene nicht kontaktieren. Hierdurch wird sichergestellt, dass die Raumerfassungsvorrichtung, wenn sie nicht mehr von einer Person getragen wird, so auf eine Horizontalebene abgelegt werden kann, dass keine der an dem Gestell befestigten Einrichtungen beschädigt werden.

Gemäß einer weiteren Ausgestaltung der erfindungsgemäßen Raumerfassungsvorrichtung umfasst diese zumindest eine Referenzmarkierung, beispielsweise in Form eines Pfeils oder einer Kerbe, zum Erfassen der Position und/oder Ausrichtung der Raumerfassungsvorrichtung relativ zu einem ortsfesten Koordinatensystem mit korrespondierenden Referenzmarken, die wiederum an bestimmten Punkten der zu erfassenden Umgebung angebracht sind, beispielsweise als Aufkleber an Böden oder Wänden eines zu scannenden Gebäudes, die mit einem Fadenkreuz und einer eindeutigen Bezeichnung oder Identifikationsnummer ausgestattet sind (im folgenden "Ground Control Point" genannt). Die Raumerfassungsvorrichtung wird dabei während eines laufenden Scan-Vorgangs z.B. kurz mit der Pfeilspitze ihrer Referenzmarkierung exakt an das Fadenkreuz eines solchen "Ground Control Point" gehalten und der Zeitpunkt und die eindeutige Bezeichnung oder Identifikationsnummer des "Ground Control Point" erfasst. Die Erfassung des genauen Zeitpunkts kann dabei über einen ergonomisch besonders günstig angebrachten separaten Betätigungsknopf geschehen, der gedrückt wird, sobald die Pfeilspitze und Fadenkreuzmarkierung sich berühren. Ergonomisch günstig ist hier beispielsweise, wenn der Betätigungsknopf von oben erreichbar ist, während die Raumerfassungsvorrichtung mit der Referenzmarkierung z. B. aufrecht auf dem Boden steht oder gehalten wird, während sie den "Ground Control Point" berührt, oder wenn der Betätigungsknopf mit einem Finger erreichbar ist, während die Raumerfassungsvorrichtung mit zwei Händen über einen Griff mit der Referenzmarkierung an die Wand gehalten wird. Der Betätigungsknopf ist insbesondere bei der ersten Halterung angeordnet, insbesondere bezüglich der Fortbewegungsrichtung hinter dem ersten Mehrfachscanner.

Mit Hilfe der "Ground Control Points" lässt sich die Trajektorienbestimmung mittels SLAM-Verfahren besonders exakt durchführen, da z.B. aufgrund von akkumulierter Drift bei längeren Scanvorgängen notwendige Korrekturparameter bestimmt werden können. Auch können in separaten Scanvorgängen erfasste Datensätze von angrenzenden Gebäudeteilen, die sich z.B. im Bereich von "Ground Control Points" überlappen, später besonders exakt zueinander ausgerichtet und zu einem einheitlichen Datenmodell zusammengefügt werden. Vorzugsweise sind die "Ground Control Points" auch an genau definierten Punkten angebracht, die z.B. anhand von Gebäudeplänen festgelegt oder mit herkömmlichen Vermessungsverfahren vermessen wurden. Hierdurch ist es möglich, die mit der erfindungsgemä0en Raumerfassungsvorrichtung erfassten Daten besonders exakt gegenüber anderweitig bekannten oder erfassten Daten auszurichten oder mit diesen zu vergleichen.

Alternativ können die "Ground Control Points" auch über die Kameras der Raumerfassungsvorrichtung erfasst werden, wenn diese z.B. eine eindeutige Identifikation in Form eines QR-Codes aufweisen. Ferner ist es auch möglich, an der Raumverfassung einen Laserpointer vorzusehen, über den ein "Ground Control Point" berührungslos erfasst werden kann, indem der Laserpunkt des Laserpointers z.B. in definiertem Abstand auf das Fadenkreuz des Aufklebers gerichtet wird.

Gemäß einer weiteren Ausgestaltung der erfindungsgemäßen Raumerfassungsvorrichtung ist an dem Gestell einer Steuereinrichtung befestigt, die mit den Kameras datentechnisch gekoppelt ist, wobei die Steuereinrichtung eingerichtet ist, die Bildaufnahme mittels der Kameras zeitgleich auszulösen. Auf diese Weise ist es möglich, eine Rundumaufnahme mittels der Kameras für einen bestimmten Zeitpunkt zu erzeugen.

Gemäß einer weiteren Ausgestaltung der erfindungsgemäßen Raumerfassungsvorrichtung ist an dem Gestell unterhalb des Kopfes der Person, wenn die Person die Raumerfassungsvorrichtung mittels des Gestells trägt, eine Auswerteeinrichtung befestigt, die mit den Kameras und/oder dem ersten Mehrfachscanner und/oder den WLAN/WiFi-Antennen und/oder der inertialen Messeinheit datentechnisch gekoppelt ist, wobei die Datenübertragung über eine Bündelungs- und Synchronisierungsschnittstelle erfolgt, wobei die Bündelungs- und Synchronisierungsschnittstelle oberhalb des Kopfes der Person befestigt ist. Beispielsweise kann zwischen den Kameras und der Bündelungs- und Synchronisierungsschnittstelle ein USB-Kabel vorgesehen sein und zwischen dem ersten Mehrfachscanner und der Bündelungs- und Synchronisierungsschnittstelle ein Ethernet-Kabel vorgesehen sein. Ebenso können zwischen den WLAN/WiFi-Antennen sowie der inertialen Messeinheit und der Bündelungs- und Synchronisierungsschnittstelle USB-Kabel oder Ethernet-Kabel vorgesehen sein. Die Bündelungs- und Synchronisierungsschnittstelle verknüpft die empfangenen Daten mit von ihr selbst erzeugten präzisen Zeitstempeln und konvertiert gleichzeitig die empfangenen Daten derart, dass die weitere Datenübertragung gesammelt über ein einzelnes USB-Kabel oder Ethernetkabel erfolgen kann. Die Bündelungs- und Synchronisierungsschnittstelle ist dann mit der Auswerteeinrichtung über ein solches einzelnes USB-Kabel oder Ethernetkabel verbunden, so dass eine Datenübertragung von der Bündelungs- und Synchronisierungsschnittstelle zu der Auswerteeinrichtung erfolgen kann, wobei nur ein einzelnes solches Datenübertragungskabel von der Bündelungs- und Synchronisierungsschnittstelle zu der Auswerteinrichtung geführt werden muss, welches somit als Sammel-Datenübertragungskabel fungiert, und dieses insbesondere innerhalb von Rohren des Gestells verlegt werden kann. Durch die noch in der Bündelungs- und Synchronisierungsschnittstelle stattfindende sofortige Verknüpfung der von den verschiedenen Einheiten empfangenen Daten mit präzisen Zeitstempeln werden etwaige Timing- und Latenzprobleme im Zusammenhang mit Pufferung und Zwischenspeicherung auf der weiteren Datenübertragungsstrecke zur Auswerteeinheit und bei der Abarbeitung der dort eingehenden Daten minimiert. Die SLAM-Algorithmen können somit auf die von der Bündelungs- und Synchronisierungsschnittstelle nah an den jeweiligen Datenquellen mit minimaler Latenz vergebenen Zeitstempel der empfangenen Daten zurückgreifen, so dass auch bei starker Rechenauslastung der Auswerteeinheit etwaige Verzögerungen oder Sprünge in der Reihenfolge bei der Abarbeitung zu keinen Konsistenz- oder Präzisionsproblemen führen..

Des Weiteren kann der zweite Mehrfachscanner mit der Auswerteeinrichtung datentechnisch gekoppelt sein. Da der zweite Mehrfachscanner in räumlicher Nähe zu der Auswerteeinrichtung angeordnet ist, kann die Datenübertragung hier über ein separates Kabel erfolgen. Es ist aber auch möglich, den zweiten Mehrfachscanner mit der Bündelungs- und Synchronisierungsschnittstelle zu koppeln, so dass auch die von diesem Scanner gelieferten Daten mit den Synchronisierungs-Zeitstempeln verknüpft werden können.

Vorteilhafterweise weist die erfindungsgemäße Raumerfassungsvorrichtung ferner eine mit der Auswerteeinrichtung gekoppelte Anzeigeeinrichtung zum Anzeigen der von der Auswerteeinrichtung erzeugten graphischen Darstellungen auf.

Die Auswerteeinrichtung ist insbesondere ausgebildet, zumindest aus Daten, die durch detektierte Reflexionsstrahlungen erzeugt werden, die von dem Empfänger oder den Empfängern erfasst worden sind, in Echtzeit die Position der Raumerfassungsvorrichtung innerhalb des Objektraums und/oder die Trajektorie der Raumerfassungsvorrichtung zu berechnen und mittels einer graphischen Darstellung auszugeben. Auf diese Weise kann der begangene und/oder begehbare Bereich des Objektraums, der bereits abgetastete Bereich des Objektraums oder der noch nicht abgetastete Bereich des Objektraums in einer Gesamtdarstellung des Objektraums auf Basis der bereits erfassten Daten angezeigt werden. Die Person kann somit anhand der graphischen Darstellung erkennen, welche Bereiche des Objektraums noch erfasst werden müssen. Zusätzlich kann auch die Qualität der erfassten Daten für die jeweils erfassten Raumbereiche in Echtzeit in einer sogenannten "Live Quality Map" angezeigt werden, damit die Person beurteilen kann, welche Raumbereiche gegebenenfalls noch besser erfasst werden müssen.

Schließlich kann die Raumerfassungsvorrichtung eine Datenschnittstelle aufweisen, die zumindest mit der Auswerteeinrichtung datentechnisch gekoppelt ist und die ausgebildet ist, Daten an eine Speichereinrichtung zur Nachverarbeitung auszugeben.

Die Erfindung wird nun anhand eines Ausführungsbeispiels mit Bezug zu den Zeichnungen erläutert.
- Figuren 1A und B: zeigen perspektivische Ansichten eines Ausführungsbeispiels des erfindungsgemäßen Gestells und der erfindungsgemäßen Raumerfassungsvorrichtung,
- Figur 2A: zeigt eine Person, welche die in den Figuren 1A und 1B gezeigte Raumerfassungsvorrichtung trägt,
- Figur 2B: zeigt eine Detailansicht der Figur 2A,
- Figur 2C: veranschaulicht die Wahl der vertikalen Position der Kameras, wenn eine Person eine Raumerfassungsvorrichtung trägt,
- Figur 2D: zeigt den toten Winkel der Kameras, wenn eine Person die in den Figuren 1A und 1B gezeigte Raumerfassungsvorrichtung trägt,
- Figur 3A: zeigt eine Person, welche die in den Figuren 1A und 1B gezeigte Raumerfassungsvorrichtung in einem nach vorne gekippten Zustand trägt,
- Figur 3B: zeigt eine Detailansicht der Figur 3A,
- Figur 4: zeigt einen Querschnitt der Verbindung der Hüftauflage mit dem Anlegeteil des Ausführungsbeispiels des erfindungsgemäßen Gestells und der erfindungsgemäßen Raumerfassungsvorrichtung,
- Figur 5: zeigt die Ausrichtung der Scaneinrichtungen der erfindungsgemäßen Raumerfassungsvorrichtung,
- Figur 6: zeigt den Aufnahmewinkel der Kameras der erfindungsgemäßen Raumerfassungsvorrichtung,
- Figur 7: zeigt die auf einer horizontalen Ebene abgestellte erfindungsgemäße Raumerfassungsvorrichtung und
- Figur 8: zeigt den datentechnischen Aufbau des Ausführungsbeispiels der erfindungsgemäßen Raumerfassungsvorrichtung.

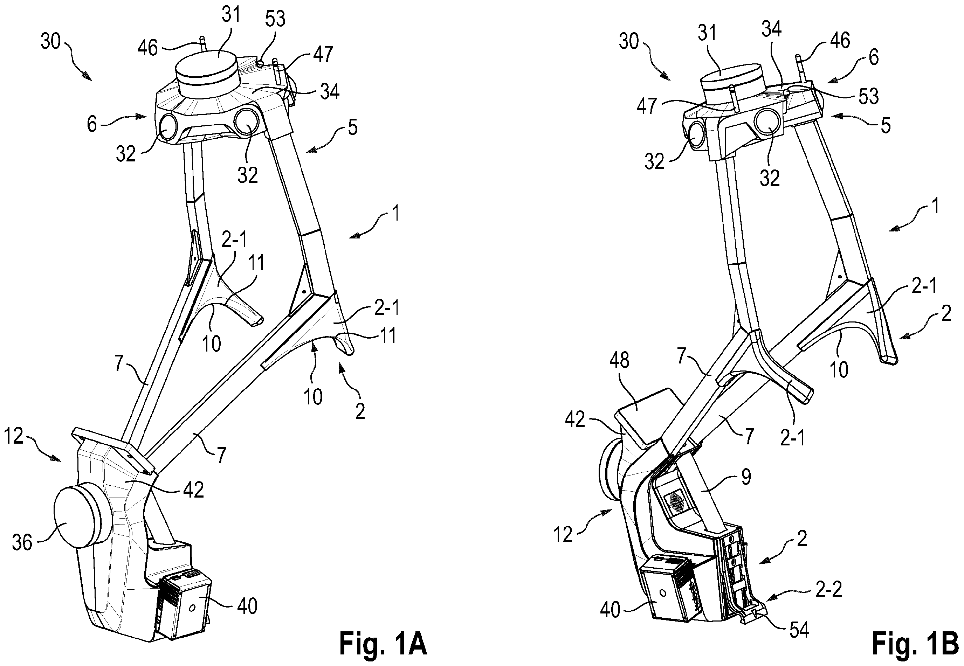

Mit Bezug zu den Figuren 1A und 1B wird zunächst ein Ausführungsbeispiel des erfindungsgemäßen Gestells 1 und ein Ausführungsbeispiel der erfindungsgemäßen Raumerfassungsvorrichtung 30, welche das erfindungsgemäße Gestell 1 umfasst, erläutert:
Das Gestell umfasst eine Trageeinrichtung 2, mittels welcher eine Person das Gestell 1 und die an dem Gestell 1 befestigten Einrichtungen tragen kann. Die Trageeinrichtung 2 umfasst zwei Schulterauflagen 2-1 und ein Anlegeteil 2-2. Die Schulterauflagen 2-1 sind etwa in der Mitte des Gestells 1 mit einem zweigeteilten Ausleger 7 verbunden. Der Ausleger 7 verbindet den mittleren Teil des Gestells 1, an dem die Schulterauflagen 2-1 befestigt sind, über jeweils einen Ausleger 7 mit dem unteren Teil des Gestells 1, bei dem das Anlegeteil 2-2 angeordnet ist. Das Anlegeteil 2-2 ist somit über den Ausleger 7 mit den Schulterauflagen 2-1 verbunden. Das Anlegeteil 2-2 ist am untersten Bereich des Gestells 1 höhenverstellbar befestigt. Es wirkt mit einer Hüftauflage 4 und ggf. einem Hüftgurt 3 zusammen, wie es später erläutert wird. Von den Schulterauflagen 2-1 erstreckt sich ein oberer zweigeteilter Gestellabschnitt 5 zu einem Kopfteil des Gestells 1.

Die Schulterauflagen 2-1 weisen einen gebogenen Abschnitt 10 auf. Bei einer vertikalen Ausrichtung des Gestells 1, d. h. bei einer Ausrichtung, bei der das Gestell 1 von einer Person getragen wird, weist der gebogene Abschnitt 10 einen oberen Scheitelpunkt 11 auf. Der gebogene Abschnitt 11 geht auf einer Seite des Scheitelpunkts 11, die bei angelegtem Gestell 1 nach vorne zeigt, in den Ausleger 7 über. Dieser Teil des gebogenen Abschnitts 10 liegt bei angelegtem Gestell 1 an dem oberen Brustbereich der tragenden Person an. Auf der anderen Seite des Scheitelpunkts 11 geht der gebogene Abschnitt nach hinten unten und liegt bei angelegtem Gestell 1 etwa an einem Teil des Schulterblatts der tragenden Person an. In Vertikalrichtung des Gestells 1, die auch als Längsrichtung des Gestells 1 bezeichnet wird, ist der Abstand des hinteren Endes des gebogenen Abstands 10 vom Scheitelpunkt 11 in einem Bereich von 50 mm bis 100 mm, insbesondere von 70 mm bis 90 mm.

Im Kopfbereich des Gestells ist am oberen Ende des oberen Gestellabschnitts 5 eine erste Halterung 6 angeordnet. An dieser ersten Halterung 6 ist ein erster Mehrfachscanner 31 befestigt. Als erster Mehrfachscanner 31 wird ein Mehrebenen-Laserscanner der Firma Velodyne, Typ Puck LITE, verwendet. Der erster Mehrfachscanner 31 umfasst mehrere Emissionseinheiten. Diese Emissionseinheiten setzen sich aus einer Vielzahl von Lasern zusammen, welche in einem Bauteil integriert sind, und die auf diese Weise eine feste Ausrichtung zueinander haben. Die Laser der Emissionseinheiten erzeugen eine Vielzahl von Signalstrahlen in Emissionsrichtungen. Die Signalstrahlen sind so ausgerichtet, dass sie einen Emissionsfächer aufspannen, der eine Ebene definiert. Details zu Geometrie und Ausrichtung dieses Emissionsfächers werden später erläutert. Die Signalstrahlen können z. B. auf ein Objekt treffen, an deren Oberfläche sie gestreut bzw. reflektiert werden. Auf diese Weise werden Reflexionsstrahlungen erzeugt. Der rückgestreute bzw. rückreflektierte Anteil dieser Reflexionsstrahlungen wird von einem Empfänger detektiert, der in die Emissionseinheiten integriert ist.

Im vorliegenden Ausführungsbeispiel umfassen die Emissionseinheiten 16 Laser, die aufeinanderfolgend Signalpulse emittieren. Beispielsweise emittieren die einzelnen Laser der Emissionseinheiten aufeinanderfolgend Signalpulse. Der zeitliche Abstand zwischen diesen Signalpulsen ergibt sich aus der Laufzeit eines Signalpulses zu einem Objekt, welches bei der maximalen Reichweite des ersten Mehrfachscanners 31 angeordnet ist, dort reflektiert wird und wieder zurück zum Empfänger gelangt. Wenn der Empfänger diesen Signalpuls detektiert hat, wird der Signalpuls des nächsten Lasers emittiert. Beispielsweise kann zwischen den Signalpulsen ein Zeitintervall von 2,3 µs liegen. In dieser Zeit kann das Licht 690 m zurücklegen, so dass auch bei einer maximalen Reichweite von 100 m ein ausreichender Zeitabstand zwischen aufeinanderfolgenden Signalpulsen liegt. Ein Signalpuls ist dabei beispielsweise 6 ns lang.

Ferner umfasst der erste Mehrfachscanner 31 eine Abtasteinrichtung. Diese Abtasteinrichtung verändert die Emissionsrichtungen der Signalstrahlen. Dabei werden die Emissionsrichtungen der Signalstrahlen um eine Rotationsachse gedreht. Diese Rotationsachse liegt in der von dem Emissionsfächer der Signalstrahlen gebildeten Ebene. Ferner steht die Rotationsachse senkrecht auf einer Mittelachse des Emissionsfächers der Signalstrahlen. Diese Mittelachse kann dabei insbesondere eine Symmetrieachse des Emissionsfächers der Signalstrahlen sein. Von dem ersten Mehrfachscanner 31 wird auf diese Weise der Rotationskörper eines Fächers erfasst.

Das Gestell 1 umfasst ferner eine zweite Halterung 12 im unteren Bereich des Gestells 1 am unteren Ende des Auslegers 7. An der zweiten Halterung 12 ist ein zweiter Mehrfachscanner 36 befestigt. Der zweite Mehrfachscanner 36 ist dabei, wie der Ausleger 7, vor der Person 49 angeordnet, welche die Raumerfassungsvorrichtung 30 trägt. Es handelt sich, wie beim ersten Mehrfachscanner 31, um einen Mehrebenen-Laserscanner, welcher den gleichen Aufbau wie der erste Mehrfachscanner 31 hat. Der zweite Mehrfachscanner 36 ist jedoch anders ausgerichtet als der erste Mehrfachscanner 31. Er ist im Wesentlichen vertikal ausgerichtet, d. h. die Mittelachse seines Emissionsfächers ist im Wesentlichen vertikal ausgerichtet, wie es später erläutert wird.

Des Weiteren weist die Raumerfassungsvorrichtung 30 mehrere Kameras 32 auf, welche digitale Bilder von der Umgebung aufnehmen können. Bei dem beschriebenen Ausführungsbeispiel sind fünf Kameras der Firma FLIR mit Weitwinkelobjektiven der Firma Sunex an der ersten Halterung 6 auf einem Kreisring angeordnet. Wenn eine Person die Raumerfassungsvorrichtung 30 trägt, ist der Kreisring im Wesentlichen horizontal ausgerichtet. Die Kameras 32 sind auf dem Kreisring in gleichen Winkelabständen auf einem regelmäßigen Fünfeck voneinander positioniert. An der ersten Halterung 6 sind außerdem eine inertiale Messeinheit 34 sowie zwei Empfangsantennen 46 und 47 befestigt, deren Funktion später erläutert wird.

Bei einer Weiterbildung des Ausführungsbeispiels kann das Gestell 1 einen Stoßfänger umfassen. Dieser umgibt insbesondere den ersten Mehrfachscanner 31, die Kameras 32, die Empfangsantennen 46, 47 und die inertiale Messeinheit 34, um diese gegen Stöße zu schützen.

Bei der zweiten Halterung 12 im unteren Bereich des Gestells 1 sind ferner eine Auswerteeinrichtung 42, ein Display 48 und eine Energieversorgung 40 befestigt, welche als wiederaufladbare Batterie ausgebildet ist. Des Weiteren erstreckt sich zwischen dem Ausleger 7 in Richtung des Anlegeteils 2-2 ein Griff 9, an welchem die Person, welche die Raumerfassungsvorrichtung 30 trägt, diese im unteren Bereich festhalten kann.

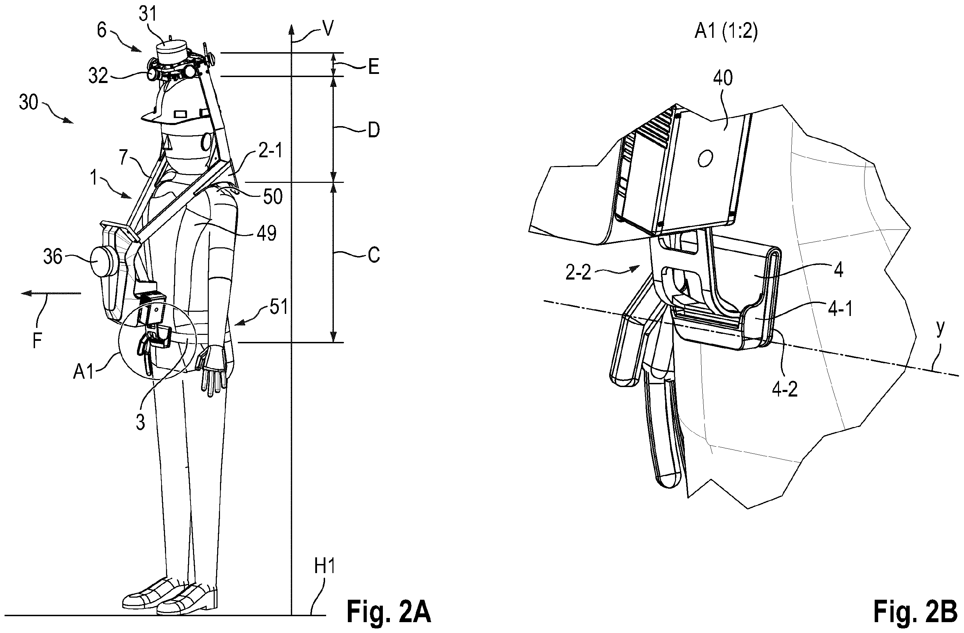

Mit Bezug zur Figur 2A wird erläutert, wie das Gestell der Raumerfassungsvorrichtung 30 an eine Person 49 angelegt und getragen werden kann. Bei der Darstellung der Figur 2A ist die erste Halterung 6 ohne eine Abdeckung dargestellt, wie sie in den Figuren 1A und 1B gezeigt ist.

Das Gestell 1 ist so ausgebildet, dass beim Tragen des Gestells 1 der Ausleger 7 vor der Person 49 angeordnet ist, wenn diese das Gestell 1 mittels der Trageeinrichtung 2 trägt. Die Person 49 kann jedoch zwischen dem zweiteiligen Ausleger 7 hindurchschauen. Beim Tragen des Gestells 1 durch eine aufrecht stehende Person ist die Raumerfassungsvorrichtung 30 definitionsgemäß in Vertikalrichtung V ausgerichtet. Dabei liegen die gebogenen Abschnitte 10 der Schulterauflagen 2-1 auf den Schultern 50 der Person 49 auf. Auf diese Weise wird ein Teil des Gewichts der Raumerfassungsvorrichtung 30 von den Schultern 50 der Person 49 getragen. Da ferner die gebogenen Abschnitte 10 der Schulterauflagen 2-1 die Schultern 50 nach hinten unten in einem begrenzten Bereich umschließen, verhindern die Schulterauflagen 2-1, dass die Raumerfassungsvorrichtung 30 nach vorne um das auf der Hüftauflage 4 aufliegende Anlegeteil 2-2 kippt.

Das Anlegeteil 2-2 befindet sich in der Höhe des Bereichs der Hüfte 51 der Person 49, wenn die Person 49 das Gestell mittels der Trageeinrichtung 2 trägt. In diesem Fall liegen die Schulterauflagen 2-1 auf den Schultern 50 der Person 49 auf.

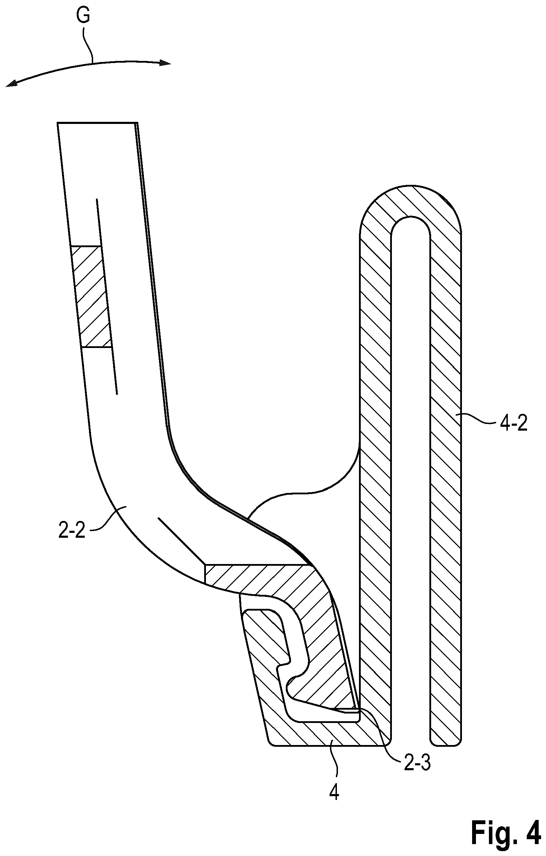

Der untere Bereich der Raumerfassungsvorrichtung 30 ist im Detail in Fig. 2B gezeigt. In diesem Bereich liegt das Anlegeteil 2-2 auf der Hüftauflage 4 auf. Die Kopplung des Anlegeteils 2-2 mit der Hüftauflage 4 ist im Detail in der Querschnittsdarstellung der Figur 4 gezeigt. Das Anlegeteil 2-2 ist plattenförmig ausgebildet, wobei es im unteren Bereich wie in Fig. 4 gezeigt, zwei Biegungen aufweist. Das Anlegeteil 2-2 weist unten eine Querkante 2-3 auf, welche senkrecht zur Fortbewegungsrichtung F der Person 49 ausgerichtet ist. Die Hüftauflage 4 ist im vorderen Teil U-förmig ausgebildet. In diesem Bereich kann das untere Ende des Anlegeteils 2-2 eingeführt werden, so dass die Querkante 2-3 auf der Hüftauflage 4 aufliegt, und dadurch die Gewichtskraft der Raumerfassungsvorrichtung 30 aufgenommen werden kann. Das Anlegeteil 2-2 korrespondiert somit zur Hüftauflage 4. Das Anlegeteil 2-2 wird dabei so von dem U-förmigen Bereich der Hüftauflage 4 aufgenommen, dass es um eine Querachse Y um die längliche Querkante 2-3 des Anlegeteils 2-2 in Richtung des Doppelpfeils G von der in Fig. 2A gezeigten Stellung nach vorne gekippt werden kann. Um eine solche Schwenkbewegung zu ermöglichen, senkt die Person 40 beide Schultern 50 etwas ab, so dass die hinteren Bereiche der gebogenen Abschnitte 10 der Schulterauflagen 2-1 an den Schultern 50 vorbei nach vorne gekippt werden können.

Die Hüftauflage 4 weist ferner Vertikalwangen 4-1 auf. Diese behindern ein Schwenken des auf der Hüftauflage 4 aufliegenden Anlegeteils 2-2 um eine zur Querachse Y senkrechten Achse. Ein seitliches Kippen des Gestells 1 und auch Drehungen des Gestells 1 relativ zu der Hüftauflage 4 um eine vertikale Achse werden somit verhindert.

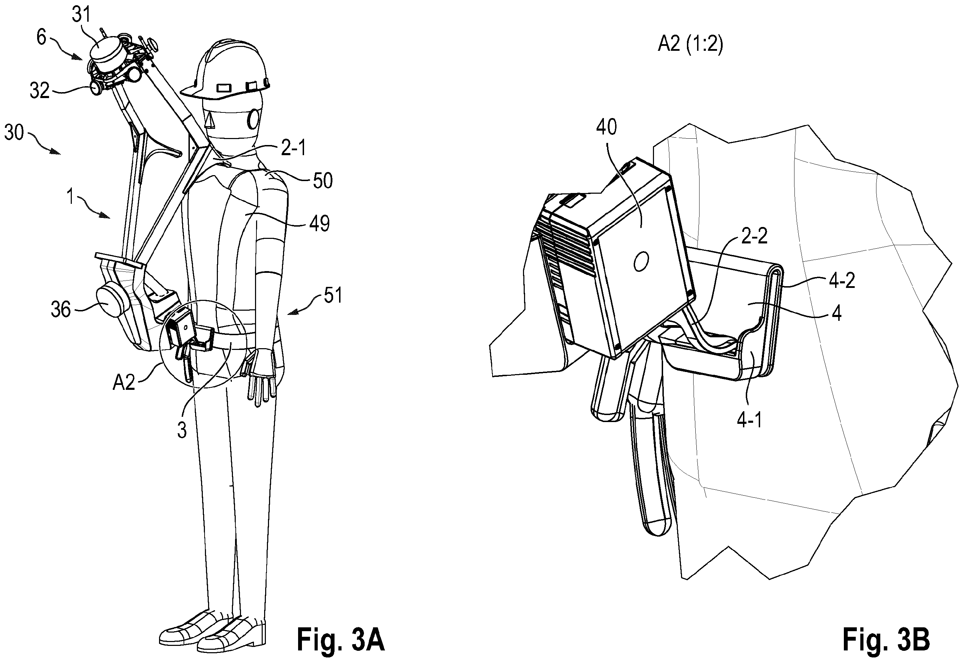

Der nach vorne gekippte Zustand der Raumerfassungsvorrichtung 30 ist in den Figuren 3A und 3B gezeigt. Auch hier ist die erste Halterung 6 ohne die Abdeckung dargestellt, wie sie in den Figuren 1A und 1B gezeigt ist. In diesem gekippten Zustand wird die Gewichtskraft der Raumerfassungsvorrichtung 30 vollständig von der Hüftauflage 4 aufgenommen. Die Hüftauflage 4 kann hierfür an einem Hüftgurt 3 mittels der Gurtaufnahme 4-2 befestigt sein. Alternativ kann die Gurtaufnahme 4-2 auch in den Gürtel der Person 49 eingehakt werden. Im ungekippten Zustand der Raumerfassungsvorrichtung 30, d. h. im Betriebszustand der Raumerfassungsvorrichtung 30, wie er in Figur 2 A gezeigt ist, wird mehr als 50% der Gewichtskraft der Raumerfassungsvorrichtung 30 mittels der Hüftauflage 4-2 getragen. Im Betriebszustand wird die Raumerfassungsvorrichtung 30 von einer Person 49 getragen, wie es in Fig. 2A gezeigt ist. Die Schulterauflagen 2-1 verhindern in diesem Fall insbesondere, dass die Raumerfassungsvorrichtung 30 nach vorne kippt. Sie dienen somit insbesondere der Stabilisierung. Ferner kann zur Stabilisierung die Raumerfassungsvorrichtung 30 auch am Griff 9 mit den Händen der Person 49 festgehalten werden.

Wenn die Person 49, welche die Raumerfassungsvorrichtung 30 trägt, auf einer Horizontalebene H1 steht, ergibt sich in Vertikalrichtung V , wie in Fig. 2A gezeigt, ein Abstand C zwischen den Schulterauflagen 2-1 bzw. einer Schulterauflage 2-1 und dem Anlegeteil 2-2.

Zwischen den Schulterauflagen 2-1 bzw. der Schulterauflage 2-1 und der ersten Halterung 6 ergibt sich ein Abstand D und zwischen dem ersten Mehrfachscanner 31 und den Kameras 32 ein Abstand E. Der Abstand C liegt in einem Bereich von 400 mm bis 800 mm, insbesondere in einem Bereich von 500 mm bis 700 mm bei dem vorliegenden Ausführungsbeispiel ist dieser Abstand gleich 515 mm. Der Abstand D liegt in einem Bereich von 300 mm bis 500 mm, insbesondere in einem Bereich von 350 mm bis 400 mm und ist bei dem vorliegenden Ausführungsbeispiel gleich 372 mm. Der Abstand E liegt in einem Bereich von 50 mm bis 100 mm, insbesondere in einem Bereich von 60 mm bis 80 mm. Er ist bei dem vorliegenden Ausführungsbeispiel gleich 72 mm. Dabei ist der erste Mehrfachscanner 31 oberhalb der Kameras 32 angeordnet. Der unterste Bereich der ersten Halterung 6 ist dabei so weit von den Scheitelpunkten 11 der Schulterauflagen 2-1 entfernt, dass der Kopf der Person 49, welche die Raumerfassungsvorrichtung 30 trägt, ein freies Blickfeld nach vorne hat. Ferner ist der Abstand D ausreichend groß, dass die Person 49 auf dem Kopf einen Helm tragen kann.

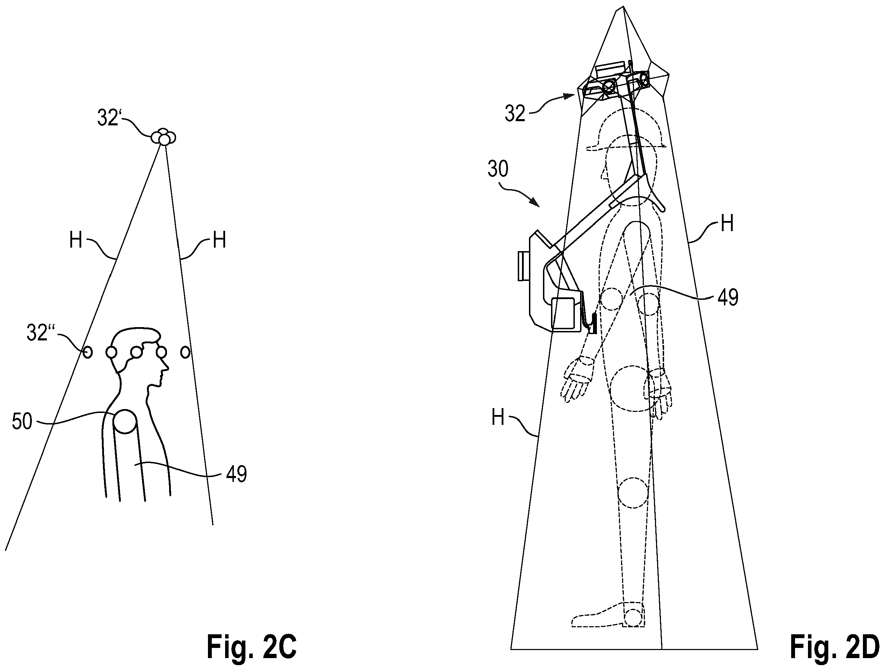

Durch diese Anordnung der Kameras 32 wird ein praktikabler Kompromiss zwischen zwei gegenläufigen Anforderungen gefunden, wie es mit Bezug zu den Figuren 2C und 2D erläutert wird:
Eine möglichst hohe Anordnung der Kameras, wie es in Figur 2C mit dem Bezugszeichen 32' bezeichnet ist, würde es zwar ermöglichen, den Kameraabstand zu minimieren, wodurch sogenannte Stiching-Artefakte minimiert würden, während gleichzeitig andere Teile des Kopfes oder der Schultern 50 der Person 49, welche die Raumerfassungsvorrichtung 30 trägt, in den erfassten Bildern wegen der größeren Entfernung nur in einem kleineren Winkelbereich, der durch die Grenzlinien H veranschaulicht ist, sichtbar wäre. Dies würde zu einer optimalen Rundumaufnahme des umgebenden Raums mit minimalen Stitching-Artefakten führen. Bei einer sehr hohen Anordnung der Kameras 32' würde die Raumerfassungsvorrichtung allerdings sehr weit über den Kopf der Person 49 ragen, so dass sich die Person nicht in niedrigen Räumen oder durch Türöffnungen bewegen könnte, ohne die Raumerfassungsvorrichtung 30 mit den Kameras 32' nach vorne zu kippen. Ferner könnte die Raumerfassungsvorrichtung 30 in diesem Fall nicht so stabil von der Person 49 getragen werden. Auch die Auslenkungen bei einer Bewegung der Person 49 in der Höhe der Kameras 32' wären sehr viel größer. Zudem wäre eine zu hohe Aufnahmehöhe der Bilder nachteilhaft, da die daraus erzeugte Panorama-Ansicht nicht der natürlichen Sichthöhe eines Betrachters entspräche.

Die Anordnung der Kameras 32 oberhalb des Kopfes ist ferner gegenüber einer Anordnung in Kopfhöhe der Person 49, wie sie in Figur 2C mit dem Bezugszeichen 32" bezeichnet ist, vorteilhaft, da in diesem Fall eine ungestörte Rundumaufnahme möglich ist, und das Sichtfeld der Person 49 nicht beeinträchtigt ist. Der tote Winkel, welcher sich bei den Kameras 32"ergibt und der durch die Grenzlinie H veranschaulicht ist, kann minimiert werden, wobei gleichzeitig ein praktikabler Einsatz der Raumerfassungsvorrichtung 30 beim Tragen durch eine Person 49 erhalten bleibt.

In Figur 2D ist die Anordnung der Kameras 32 bei dem Ausführungsbeispiel der erfindungsgemäßen Raumerfassungsvorrichtung 30 zusammen mit den Grenzlinien 50 gezeigt, welche den toten Winkel der Kameras 32 definieren. Wie gezeigt, befindet sich die Person 49 innerhalb dieses toten Winkels.

Wie in Figur 1B gezeigt umfasst die Raumerfassungsvorrichtung 30 ferner bei dem Anlegeteil 2-2 eine Referenzmarkierung 54 in Form einer Kerbe. Sie dient dem Erfassen der Position und/oder Ausrichtung der Raumerfassungsvorrichtung 30 relativ zu einem ortsfesten Koordinatensystem mit korrespondierenden Referenzmarken ("Ground Control Points"), die wiederum an bestimmten Punkten der zu erfassenden Umgebung angebracht sind, beispielsweise als Aufkleber an Böden oder Wänden eines zu scannenden Gebäudes, die mit einem Fadenkreuz und einer eindeutigen Bezeichnung oder Identifikationsnummer ausgestattet sind. Die Raumerfassungsvorrichtung 30 wird dabei während eines laufenden Scan-Vorgangs z.B. kurz mit der Pfeilspitze ihrer Referenzmarkierung 54 exakt an das Fadenkreuz eines solchen "Ground Control Point" gehalten und der Zeitpunkt und die eindeutige Bezeichnung oder Identifikationsnummer des "Ground Control Point" erfasst. Der genaue Zeitpunkt wird dabei über die Betätigung eines separaten Betätigungsknopfes 53 erfasst, der gedrückt wird, sobald die Pfeilspitze und Fadenkreuzmarkierung sich berühren.

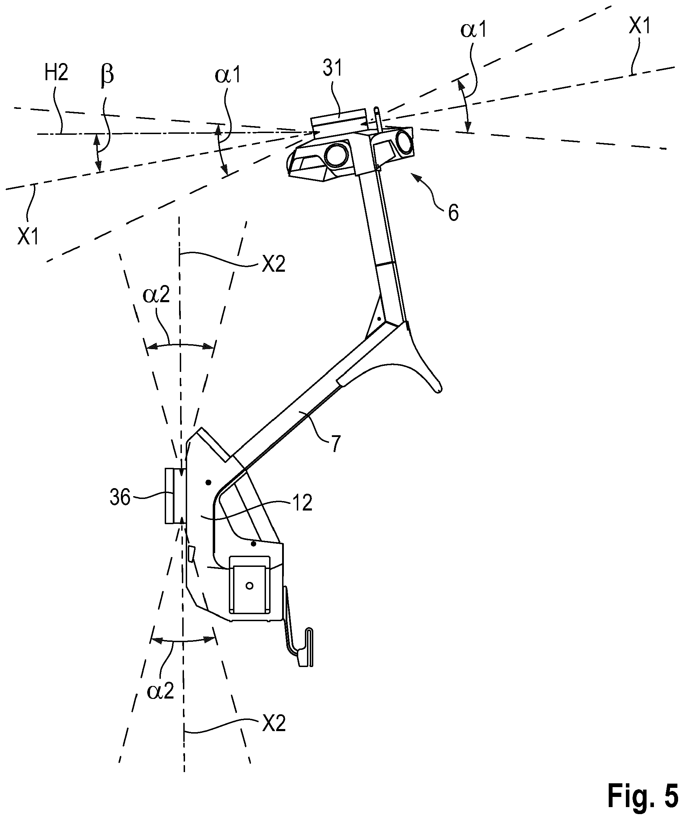

Mit Bezug zur Figur 5 werden die Ausrichtungen des ersten Mehrfachscanners 31 und des zweiten Mehrfachscanners 36 im Betriebszustand der Raumerfassungsvorrichtung 30 erläutert:
Der erste Mehrfachscanner 31 ist an der ersten Halterung 6 so befestigt, dass die Mittelachse X1 seines Emissionsfächers einen Winkel β mit der Horizontalebene H2 einschließt. Der Winkel β liegt dabei in einem Bereich von 5° bis 20°. Bei dem vorliegenden Ausführungsbeispiel ist der Winkel β gleich 10°. Der erste Mehrfachscanner 31 ist somit um 10° nach vorne geneigt. Der Emissionsfächer weist einen Öffnungswinkel α1 auf. Dieser Öffnungswinkel liegt in einem Bereich von 10° bis 40°. Im vorliegenden Ausführungsbeispiel ist der Winkel α1 30°.

Der zweite Mehrfachscanner 36 ist an der zweiten Halterung 12 so befestigt, dass seine Mittelachse X2 vertikal ausgerichtet ist. Der Öffnungswinkel α2 des Emissionsfächers des zweiten Mehrfachscanners 36 entspricht dem Öffnungswinkel α1 des Emissionsfächers des Mehrfachscanners 31. Die Person 49, welche die Raumerfassungsvorrichtung 30 trägt, befindet sich somit außerhalb der Emissionsfächer der Mehrfachscanner 31, 36.

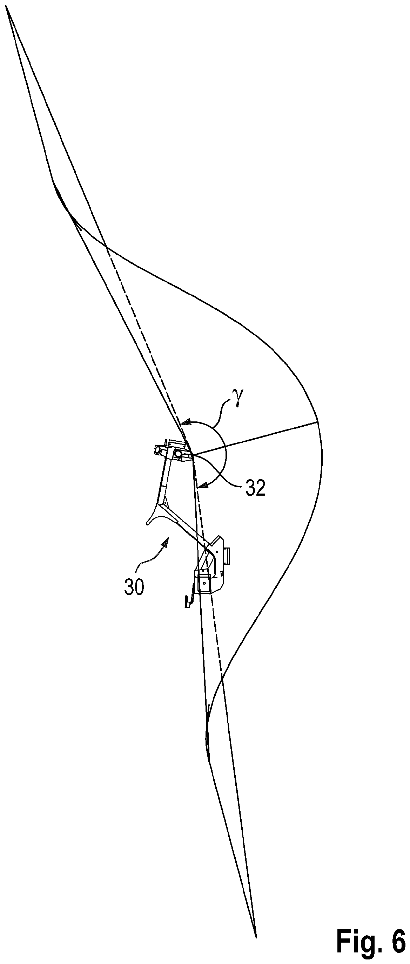

Mit Bezug zu Figur 6 wird der Aufnahmewinkel der Kameras 32 erläutert.

Der Öffnungswinkel jeder Kamera 32 ist dabei kein rotationssymmetrischer Kegel. Vielmehr ist der Öffnungswinkel in verschiedenen Richtungen unterschiedlich. Bei einem Vertikalschnitt durch die Raumerfassungsrichtung 30, wie er in Fig. 6 gezeigt ist, ergibt sich ein vertikaler Öffnungswinkel γ. Dieser ist in einem Bereich von 170° bis 210°. Im vorliegenden Ausführungsbeispiel ist dieser Öffnungswinkel γ größer als 180°, nämlich 195. Der vertikale Öffnungswinkel γ ist dabei so ausgerichtet, dass sich die Person 49, wenn sie die Raumerfassungseinrichtung 30 trägt, überwiegend außerhalb des Aufnahmewinkels der Kameras 32 befindet. Ferner ist der horizontale Abstand der Kamera 32 so gering wie möglich gewählt, so dass der von den Kameras 32 in unmittelbarer Umgebung der Person 49 erfasste Bereich so groß wie möglich ist. Mittels der auf dem Kreisring angeordneten Kameras 32 kann insbesondere der Objektraum, welcher die Person 49 umgibt, vollständig erfasst werden, wobei nur die Person 49 selbst bei den Aufnahmen der Kameras 32 ausgespart ist.

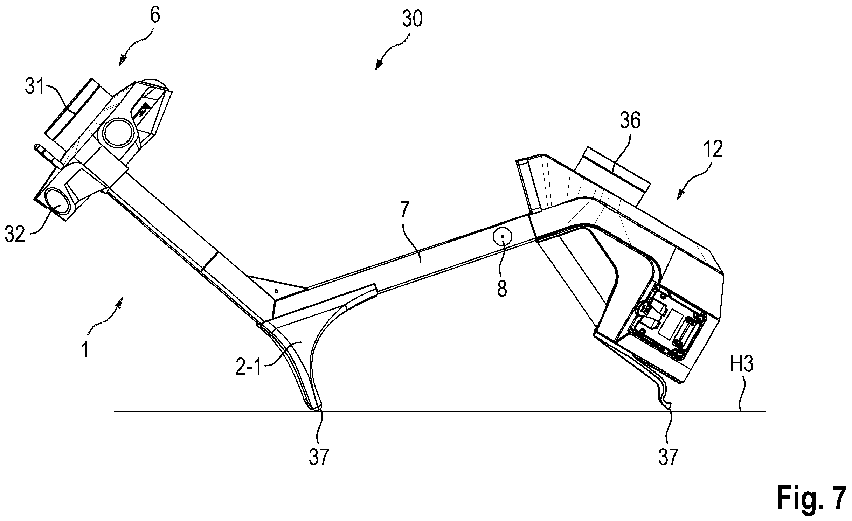

Mit Bezug zur Fig. 7 wird erläutert, wie die Raumerfassungsvorrichtung 30 auf einer horizontalen Ebene H3 abgestellt werden kann:
Bei dem Gestell 1 sind Aufsetzpunkte 37 definiert, auf welchen die Raumerfassungsvorrichtung 30 auf der Horizontalebene H3 so frei liegen kann, dass der erste Mehrfachscanner 31, der zweite Mehrfachscanner 36 und die Kameras 32 die horizontale Ebene H3 nicht kontaktieren. Bei dem beschriebenen Ausführungsbeispiel sind drei Aufsetzpunkte 37 gebildet, und zwar bei den hinteren Kanten der Schulterauflagen 2-1 und bei dem Anlegeteil 2-2.

Um die Raumerfassungsvorrichtung 30 mit einem kleineren Packmaß transportieren zu können, weist das Gestell 1 bei einem abgewandelten in Figur 7 dargestellten Ausführungsbeispiel bei dem Ausleger 7 ein mittleres Gelenk 8 auf. Dieses mittlere Gelenk 8 ermöglicht es, den Kopfbereich der Raumerfassungsvorrichtung 30 in Richtung des unteren Bereichs zu schwenken, um das Packmaß der Raumerfassungsvorrichtung 30 zu verkleinern. Das mittlere Gelenk 8 weist zwei Rastpositionen auf: Eine Rastposition für das zusammengeklappte Gestell 1 und eine andere Rastposition für das Gestell 1 im Betriebszustand, wie es in Fig. 7 gezeigt ist.

Bei einem alternativen Ausführungsbeispiel kann das Gestell 1, beispielsweise bei dem Ausleger 7, auseinandergenommen und wieder zusammengesteckt werden.

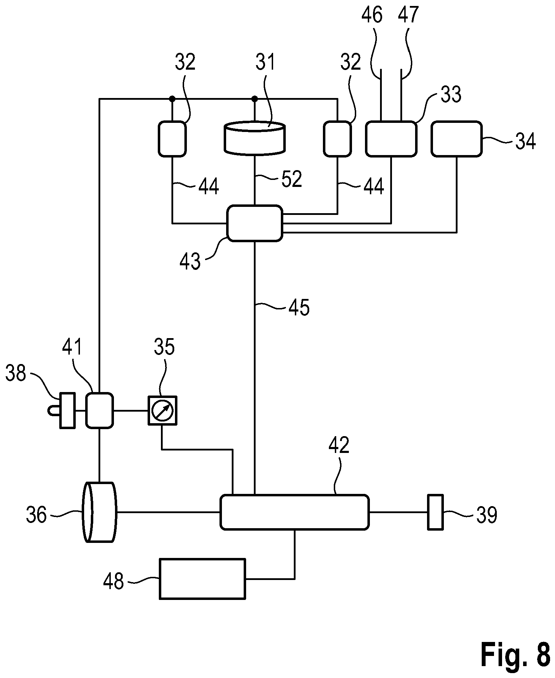

Mit Bezug zu Figur 8 wird der datentechnische Aufbau des Ausführungsbeispiels der erfindungsgemäßen Raumerfassungsvorrichtung erläutert. Es wird beschrieben, wie die einzelnen Komponenten der Raumerfassungsvorrichtung 30 datentechnisch und elektronisch zusammenwirken.

Die Kameras 32 sind mit einer Steuereinrichtung 41 verbunden. Die Steuereinrichtung 41 ist wiederum mit einem Auslöser 38 verbunden, welcher in der Nähe des Griffs 9 der Raumerfassungsvorrichtung 30 so angeordnet ist, dass die Person 49 den Auslöser 38 mit dem Finger betätigen kann. Betätigt die Person 49 den Auslöser 38, löst die Steuereinrichtung 41 eine zeitgleiche Bildaufnahme mittels der Kameras 32 aus. Die Steuereinrichtung 41 ist ferner mit einem Zeitgeber 35 gekoppelt, so dass der Zeitpunkt des Auslösens der Kamera 32 gemeinsam mit den Bildaufnahmen der Kameras 32 gespeichert werden kann. Hierfür ist der Zeitgeber 35 auch mit der Auswerteeinrichtung 42 verbunden.

Die im Kopfbereich der Raumerfassungsvorrichtung 30 bei der ersten Halterung 6 angeordneten Kameras 32 sind über USB-Kabel 44, der Mehrfachscanner 31 über ein Ethernet-Kabel 52 mit einer Bündelungs- und Synchronisierungsschnittstelle 43 verbunden, welche auch im Kopfbereich der Raumerfassungsvorrichtung 30 bei der ersten Halterung 6 angeordnet ist. Über diese USB-Kabel 44 sowie das Ethernet-Kabel 52 übertragen die Kameras 32 sowie der erste Mehrfachscanner 31 die aufgenommenen Daten, einschließlich des Zeitpunkts und der Winkelstellung der Abtasteinrichtung des Mehrfachscanners 31 sowie der Intensität jedes emittierten und empfangenen Signalpulses, an die Bündelungs- und Synchronisierungsschnittstelle 43. Die Bündelungs- und Synchronisierungsschnittstelle 43 konvertiert die empfangenen Daten und verknüpft sie mit von ihr erzeugten Zeitstempeln so, dass sie weiter über ein Sammel-Datenübertragungskabel 45, welches in den Rohren des Gestells 1 verlegt ist, an die Auswerteinrichtung 42, welche im unteren Bereich der Raumerfassungsvorrichtung 30 an der zweiten Halterung 12 befestigt ist, übertragen werden können.

Bei der ersten Halterung 6 ist des Weiteren die erste Empfangsantenne 46 für ein Signal eines drahtlosen Netzwerks (WLAN/WiFi) und die zweite Antenne 47 zum Empfangen eines drahtlosen Bluetooth-Signals angeordnet. Die von den beiden Empfangsantennen 46, 47 empfangenen Signale werden an eine Signalverarbeitungseinheit 33, welche auch bei der ersten Halterung 6 angeordnet ist, übertragen, welche die Daten weiter an die Auswerteeinrichtung 42 oder alternativ, wie in Figur 8 gezeigt, zur Weiterverarbeitung an die Bündelungs- und Synchronisierungsschnittstelle 43 überträgt.

Schließlich ist bei der ersten Halterung 6 eine inertiale Messeinheit 34 angeordnet, welche Beschleunigungen in den drei Raumrichtungen sowie Drehraten um drei Raumachsen erfasst, wodurch die Ausrichtung bzw. Änderung der Ausrichtung der Raumerfassungsvorrichtung 30 im Raum bestimmbar ist. Die von der inertialen Messeinheit 34 erfassten Daten werden an die Auswerteeinrichtung 42 oder alternativ, wie in Figur 8 gezeigt, zur Weiterverarbeitung an die Bündelungs- und Synchronisierungsschnittstelle 43 übertragen.

Von der inertialen Messeinheit 34 oder durch ein softwarebasiertes Auswertemodul in der Auswerteeinrichtung 42, welches die Daten der inertialen Messeinheit 34 auswertet, oder durch andere Sensoren, insbesondere Drucksensoren, wird außerdem ein Zustandssensor bereitgestellt. Dieser kann erfassen, wie das Gestell 1 von einer Person 49 getragen wird. Der Zustandssensor kann insbesondere erfassen, ob das Gestell 1 zumindest zum Teil von der Schulterauflage 2-1 getragen wird, wie es in Figur 2A gezeigt ist,, oder ob das Gestell 1 mittels des Anlegeteils 2-2 und der Hüftauflage 4 nach vorne geschwenkt wurde, und daher so gekippt angeordnet ist, dass es nicht mehr auf den Schultern 50 der Person 49 aufliegt, wie es in Figur 3A gezeigt ist, oder ob es in eine abgelegte Ruheposition gebracht wurde, wie es in Figur 7 gezeigt ist.

Mittels der Daten, welche die Auswerteeinrichtung 42 empfängt, kann diese die Richtung und den Abstand eines Objekts im Objektraum berechnen, welches mittels der verschiedenen Scaneinrichtungen der Raumerfassungsvorrichtung 30 erfasst worden ist. Außerdem können ggf. weitere Merkmale der Oberfläche der erfassten Objekte bestimmt werden.

Von der Auswerteeinrichtung 42 wird in Echtzeit eine dreidimensionale Punktwolke erzeugt, welche den erfassten Objektraum wiedergibt. Hierfür werden bei der Echtzeitberechnung zumindest die von den Empfängern der Mehrfachscanner 31, 36 detektierten Reflexionsstrahlungen verwendet. Des Weiteren können auch die von den Kameras 32 aufgenommenen Bilder bei der Echtzeitverarbeitung und dem Erzeugen der dreidimensionalen Punktwolke verwendet werden. Auf diese Weise berechnet die Auswerteeinrichtung 42 in Echtzeit eine grafische Darstellung derjenigen Bereiche des Objektraums, durch welche die Erfassungsvorrichtung 30 bewegt werden kann und/oder bewegt wurde. Diese grafische Darstellung wird von dem Display 48 ausgegeben. Sie wird fortwährend beim Erfassen des Objektraums aktualisiert.

Die Auswerteeinrichtung 42 ist mit einer Datenschnittstelle 39 gekoppelt. Über diese Datenschnittstelle 39 können die von der Auswerteeinrichtung 42 gesammelten Daten einschließlich der bereits während des Betriebs der Raumerfassungsvorrichtung 30 erzeugten Daten an einen Speicher zum Zwischenspeichern übertragen werden. Alternativ oder zusätzlich können die Daten auch während des Betriebs der Raumerfassungsvorrichtung oder nach Abschluss eines Erfassungsvorgangs an einen externen Datenspeicher übertragen werden. Diese Daten können dann für eine Nachverarbeitung verwendet werden. Bei dieser Nachverarbeitung wird eine präzisere Punktwolke des erfassten Objektraums erzeugt. Der Rechenaufwand bei der Nachverarbeitung ist dabei so groß, dass er nicht in Echtzeit von der Auswerteeinrichtung 42 durchgeführt werden kann.

### Bezugszeichenliste

- 1: Gestell
- 2: Trageeinrichtung
- 2-1: Schulterauflagen
- 2-2: Anlegeteil
- 2-3: Querkante des Anlegeteils
- 3: Hüftgurt
- 4: Hüftauflage
- 4-1: Vertikalwangen der Hüftauflage
- 4-2: Gurtaufnahme
- 5: oberer Gestellabschnitt
- 6: erste Halterung
- 7: Ausleger
- 8: mittleres Gelenk
- 9: Griff
- 10: gebogene Abschnitt
- 11: Scheitelpunkt
- 12: zweite Halterung
- 30: Raumerfassungsvorrichtung
- 31: erster Mehrfachscanner
- 32: Kameras
- 33: Signalverarbeitungseinheit
- 34: inertiale Messeinheit
- 35: Zeitgeber
- 36: zweiter Mehrfachscanner
- 37: Aufsetzpunkte
- 38: Auslöser
- 39: drahtgebundene Datenschnittstelle
- 40: Energieversorgung
- 41: Steuereinrichtung
- 42: Datenverarbeitungseinrichtung
- 43: Bündelungs- und Synchronisierungsschnittstelle
- 44: USB Kabel
- 45: Sammel-Datenübertragungskabel
- 46: erste Empfangsantenne
- 47: zweite Empfangsantenne
- 48: Display
- 49: Person
- 50: Schultern
- 51: Hüfte
- 52: Ethernet-Kabel
- 53: Betätigungsknopf
- 54: Referenzmarkierung

## Patentansprüche

1. Gestell (1) für zumindest eine Scaneinrichtung, welches zum Tragen der Scaneinrichtung mittels des Körpers einer Person (49) ausgebildet ist, wobei das Gestell (1) umfasst:
eine Trageeinrichtung (2) zum Anlegen und Tragen des Gestells (1) durch die Person (49), wobei die Trageeinrichtung (2) eine Schulterauflage (2-1) zum Aufliegen des Gestells (1) auf den Schultern (50) der Person (49) umfasst,
wobei die Trageeinrichtung (2) ferner ein Anlegeteil (2-2) umfasst, welches über einen Ausleger (7) starr mit der Schulterauflage (2-1) verbunden ist, wobei sich das Anlegeteil (2-2) in der Höhe des Bereichs der Hüfte (51) der Person (49) befindet, wenn die Person (49) das Gestell (1) mittels der Trageeinrichtung (2) trägt, und
wobei die Trageeinrichtung (2) ferner eine Hüftauflage (4) umfasst, welche mit dem Anlegeteil (2-2) korrespondiert, und
einen oberen Gestellabschnitt (5), an dem eine erste Halterung (6) für die zumindest eine Scaneinrichtung befestigt ist, wobei sich die erste Halterung (6) oberhalb des Kopfes der Person (49) befindet, wenn die Person (49) das Gestell (1) mittels der Trageeinrichtung (2) trägt,
**dadurch gekennzeichnet, dass**
die Hüftauflage (4) mit dem Anlegeteil (2-2) so zusammenwirkt, dass das Anlegeteil (2-2) um eine erste Achse, die parallel zu einer länglichen Querkante (2-3) des Anlegeteil (4) ausgerichtet ist, schwenkbar ist, wenn die längliche Querkante (2-3) des Anlegeteils (2-2) auf der Hüftauflage (4) aufliegt, ein Schwenken um eine zur ersten Achse senkrechte Achse jedoch behindert ist, so dass das Anlegeteil (2-2) bezüglich der Hüftauflage (4) um nur eine Achse schwenkbar ist.

2. Gestell (1) nach Anspruch 1,
**dadurch gekennzeichnet, dass**
das Gestell (1) ein mittleres Gelenk (8) zum Zusammenklappen des Gestells (1) aufweist.

3. Gestell (1) nach einem der Ansprüche 1 oder 2,
**dadurch gekennzeichnet, dass**
die Hüftauflage (4) Vertikalwangen (4-2) aufweist, welche ein Schwenken des auf der Hüftauflage (4) aufliegenden Anlegeteils (2-2) um eine zur ersten Achse senkrechte Achse behindern.

4. Gestell (1) nach einem der vorhergehenden Ansprüche,
**dadurch gekennzeichnet, dass**
die Schulterauflage (2-1) einen gebogenen Abschnitt (10) mit einem oberen Scheitelpunkt (11) aufweist und
der gebogene Abschnitt (10) auf einer Seite des Scheitelpunkts (11) in den Ausleger (7) übergeht und auf der anderen Seite am Ende einen Abstand vom Scheitelpunkt (11) in Längsrichtung des Gestells (1) aufweist, der in einem Bereich von 50 mm bis 100 mm liegt.

5. Gestell (1) nach einem der vorhergehenden Ansprüche,
**dadurch gekennzeichnet, dass**
in Längsrichtung des Gestells (1) der Abstand (C) zwischen der Schulterauflage (2-1) und dem Anlegeteil (2-2) in einem Bereich von 400 mm bis 800 mm liegt.

6. Raumerfassungsvorrichtung (30) mit zumindest einer Scaneinrichtung und einem Gestell (1) nach einem der Ansprüche 1 bis 5.

7. Raumerfassungsvorrichtung (30) nach Anspruch 6,
**dadurch gekennzeichnet, dass**
die Scaneinrichtung ein erster Mehrfachscanner (31) ist und der erste Mehrfachscanner (31) an der ersten Halterung (6) des Gestells (1) oberhalb des Kopfes der Person (49) befestigt ist, wenn die Person (49) die Raumerfassungsvorrichtung (30) mittels des Gestells (1) trägt.

8. Raumerfassungsvorrichtung (30) nach Anspruch 7,
**dadurch gekennzeichnet, dass**
der erste Mehrfachscanner (31) so ausgerichtet ist, dass eine gescannte Mittelebene (X1) des ersten Mehrfachscanners (31) einen ersten Winkel (β) mit einer Horizontalebene (H2) einschließt, der in einem Bereich von 5° bis 20° liegt, wenn die Person (49) die Raumerfassungsvorrichtung (30) mittels des Gestells (1) trägt.

9. Raumerfassungsvorrichtung (30) nach einem der Ansprüche 6 bis 8,
**dadurch gekennzeichnet, dass**
an der ersten Halterung (6) des Gestells (1) ferner zumindest eine Kamera (32), insbesondere mehrere Kameras (32) , oberhalb des Kopfes der Person (49) befestigt ist, wenn die Person (49) die Raumerfassungsvorrichtung (30) mittels des Gestells (1) trägt, und der Aufnahmewinkel (γ) der Kamera(s) (32) in einer Vertikalebene in einem Bereich von 170° bis 210° liegt, wobei sich die Person (49) außerhalb des Aufnahmewinkels (γ) der Kamera(s) (32) befindet, wenn die Person (49) die Raumerfassungsvorrichtung (30) mittels des Gestells (1) trägt.

10. Raumerfassungsvorrichtung (30) nach einem der Ansprüche 7 bis 9,
**dadurch gekennzeichnet, dass**
der erste Mehrfachscanner (31) oberhalb der Kameras (32) angeordnet ist.

11. Raumerfassungsvorrichtung (30) nach einem der Ansprüche 6 bis 10,
**dadurch gekennzeichnet, dass**
bei dem Ausleger (7) des Gestells (1) eine zweite Halterung (12) angeordnet ist, an welcher ein zweiter Mehrfachscanner (36) befestigt ist.

12. Raumerfassungsvorrichtung (30) nach Anspruch 11,
**dadurch gekennzeichnet, dass**
der zweite Mehrfachscanner (36) so ausgerichtet ist, dass eine gescannte Mittelebene (X2) des zweiten Mehrfachscanners (36) einen zweiten Winkel mit einer Vertikalebene einschließt, der in einem Bereich von -10° bis +10° liegt, wenn die Person die Raumerfassungsvorrichtung (30) mittels des Gestells (1) trägt.

13. Raumerfassungsvorrichtung (30) nach einem der Ansprüche 6 bis 12,
**dadurch gekennzeichnet, dass**
das Gestell (1) Aufsetzpunkte (37) definiert, auf welchen die Raumerfassungsvorrichtung (30) auf einer Horizontalebene (H3) so frei liegen kann, dass der erste Mehrfachscanner (31) und/oder der zweite Mehrfachscanner (36) und/oder die Kamera(s) (32) die Horizontalebene (H3) nicht kontaktieren.

14. Raumerfassungsvorrichtung (30) nach einem der Ansprüche 6 bis 13,
**dadurch gekennzeichnet, dass**
die Raumerfassungsvorrichtung (30) zumindest eine Referenzmarkierung zum Erfassen der Position und/oder Ausrichtung der Raumerfassungsvorrichtung (30) relativ zu einem ortsfesten Koordinatensystem aufweist.

15. Raumerfassungsvorrichtung (30) nach einem der Ansprüche 9 bis 14,
**dadurch gekennzeichnet, dass**
an dem Gestell (1) unterhalb des Kopfes der Person (49), wenn die Person (49) die Raumerfassungsvorrichtung (30) mittels des Gestells (1) trägt, eine Auswerteeinrichtung (42) befestigt ist, die mit den Kameras (32) und/oder dem ersten Mehrfachscanner (31) datentechnisch gekoppelt ist, wobei die Datenübertragung über eine Bündelungs- und Synchronisierungsschnittstelle (43) erfolgt, wobei die Bündelungs- und Synchronisierungsschnittstelle (43) oberhalb des Kopfes der Person (49) befestigt ist.

## Claims

1. A frame (1) for at least one scanning device designed for carrying the scanning device by means of a person's body (49), wherein the frame (1) comprises:
a supporting device (2) for fitting and carrying the frame (1) by the person (49), wherein the supporting device (2) comprises a shoulder rest (2-1) for placing the frame (1) on the shoulders (50) of the person (49),
wherein the supporting device (2) further comprises a contact part (2-2), which is connected rigidly via a bracket (7) to the shoulder rest (2-1), wherein the contact part (2-2) is located at the level of the hip region (51) of the person (49), when the person (49) is carrying the frame (1) by means of the supporting device (2), and
wherein the supporting device (2) further comprises a hip rest (4), which corresponds to the contact part (2-2), and
an upper frame section (5), to which a first holder (6) for the at least one scanning device is fastened, wherein the first holder (6) is located above the head of the person (49), when the person (49) is carrying the frame (1) by means of the supporting device (2), **characterized in that**
the hip rest (4) interacts with the contact part (2-2) so that the contact part (2-2) swivels about a first axis, which is oriented parallel to an oblong transverse edge (2-3) of the contact part (4), when the oblong transverse edge (2-3) of the contact part (2-2) is resting on the hip rest (4), but swiveling about an axis perpendicular to the first axis is blocked, such that the contact part (2-2) swivels about only one axis in relation to the hip rest (4).

2. The frame (1) as claimed in claim 1,
**characterized in that**
the frame (1) has a central hinge (8) for folding up the frame (1).

3. The frame (1) as claimed in one of claims1 or 2,
**characterized in that**
the hip rest (4) has vertical cheeks (4-2), which block swiveling of the contact part (2-2) resting on the hip rest (4) about an axis perpendicular to the first axis.

4. The frame (1) as claimed in one of the preceding claims,
**characterized in that**
the shoulder rest (2-1) has a curved segment (10) with an upper vertex (11) and
the curved segment (10) has, on one side of the vertex (11), transition into the bracket (7) and on the other side has, at the end, a distance from the vertex (11) in the longitudinal direction of the frame (1) that is in a range of from 50mm to 100mm.

5. The frame (1) as claimed in one of the preceding claims,
**characterized in that**
in the longitudinal direction of the frame (1), the distance (C) between the shoulder rest (2-1) and the contact part (2-2) is in a range of from 400mm to 800mm.

6. A spatial detection device (30) with at least one scanning device and a frame (1) as claimed in one of claims 1 to 5.

7. The spatial detection device (30) as claimed in claim 6,
**characterized in that**
the scanning device is a first multiple scanner (31) and the first multiple scanner (31) is fastened to the first holder (6) of the frame (1) above the head of the person (49), when the person (49) is carrying the spatial detection device (30) by means of the frame (1).

8. The spatial detection device (30) as claimed in claim 7,
**characterized in that**
the first multiple scanner (31) is oriented in such a way that a scanned middle plane (X1) of the first multiple scanner (31) makes a first angle (β) with a horizontal plane (H2) that is in a range of from 5° to 20°, when the person (49) is carrying the spatial detection device (30) by means of the frame (1).

9. The spatial detection device (30) as claimed in one of claims 6 to 8,
**characterized in that**
additionally at least one camera (32), in particular several cameras (32), are fastened to the first holder (6) of the frame (1) above the head of the person (49), when the person (49) is carrying the spatial detection device (30) by means of the frame (1), and
the taking angle (γ) of the camera(s) (32) in a vertical plane is in a range of from 170° to 210°, wherein the person (49) is located outside the taking angle (γ) of the camera(s) (32), when the person (49) is carrying the spatial detection device (30) by means of the frame (1).

10. The spatial detection device (30) as claimed in one of claims 7 to 29, **characterized in that**
the first multiple scanner (31) is arranged above the camera (32).

11. The spatial detection device (30) as claimed in one of claims 6 to 10,
**characterized in that**
a second holder (12), on which a second multiple scanner (36) is arranged, is fastened to the bracket (7) of the frame (1).

12. The spatial detection device (30) as claimed in claim 11,
**characterized in that**
the second multiple scanner (36) is oriented in such a way that a scanned middle plane (X2) of the second multiple scanner (36) makes a second angle with a vertical plane that is in a range of from -10° to +10°, when the person is carrying the spatial detection device (30) by means of the frame (1).

13. The spatial detection device (30) as claimed in one of claims 6 to 12,
**characterized in that**
the frame (1) defines set-down points (37), on which the spatial detection device (30) can rest freely on a horizontal plane (H3) so that the first multiple scanner (31) and/or the second multiple scanner (36) and/or the camera(s) (32) are not in contact with the horizontal plane (H3).

14. The spatial detection device (30) as claimed in one of claims 6 to 13,
**characterized in that**
the spatial detection device (30) has at least one reference mark for capturing the position and/or orientation of the spatial detection device (30) relative to a stationary coordinate system.

15. The spatial detection device (30) as claimed in one of claims 9 to 14,
**characterized in that**
on the frame (1), below the head of the person (49), when the person (49) is carrying the spatial detection device (30) by means of the frame (1), an evaluator (42) is fastened, which is coupled to the cameras (32) and/or the first multiple scanner (31) in the data technology respect, wherein data transfer takes place via a grouping and synchronizing interface (43), wherein the grouping and synchronizing interface (43) is fastened above the head of the person (49).

## Revendications

1. Armature (1) destinée à au moins un dispositif de balayage et conçue pour porter le dispositif de balayage par l'intermédiaire du corps d'une personne (49), l'armature (1) comprenant :
un dispositif de port au corps (2) destiné à recevoir l'armature (1) pour permettre à la personne (49) de la porter, le dispositif de port au corps (2) comprenant une épaulière (2-1) destinée à faire reposer l'armature (1) sur les épaules (50) de la personne (49),
ledit dispositif de port au corps (2) comprenant en outre une partie de contact (2-2) qui est reliée rigidement à l'épaulière (2-1) par l'intermédiaire d'un bras (7), la partie de contact (2-2) se trouvant à la hauteur de la zone de hanche (51) de la personne (49) lorsque la personne (49) porte l'armature (1) à l'aide du dispositif de port au corps (2), et
ledit dispositif de port au corps (2) comprenant en outre un support de hanche (4) qui correspond avec la partie de contact (2-2) ; et
une section d'armature supérieure (5) à laquelle est fixé un premier support (6) destiné audit au moins un dispositif de balayage, le premier support (6) se trouvant au-dessus de la tête de la personne (49) lorsque la personne (49) porte ladite armature (1) au moyen du dispositif de port au corps (2),
**caractérisée en ce que**
le support de hanche (4) coopère avec la partie de contact (2-2) de telle façon que la partie de contact (2-2) peut pivoter sur un premier axe qui est parallèle à un bord transversal allongé (2-3) de la partie de contact (4), lorsque le bord transversal allongé (2-3) de la partie de contact (2-2) repose sur le support de hanche (4), mais un pivotement sur un axe perpendiculaire au premier axe est empêché, si bien que la partie de contact (2-2) ne peut pivoter qu'autour d'un seul axe par rapport au support de hanche (4).

2. Armature (1) selon la revendication 1,
**caractérisée en ce que**
ladite armature (1) présente une articulation centrale (8) permettant de replier l'armature (1).

3. Armature (1) selon la revendication 1 ou 2,
**caractérisée en ce que**
le support de hanche (4) présente des joues verticales (4-2) qui empêchent la partie de contact (2-2) reposant sur le support de hanche (4) de pivoter sur un axe perpendiculaire au premier axe.

4. Armature (1) selon l'une des revendications précédentes,
**caractérisée en ce que**
l'épaulière (2-1) présente une section incurvée (10) dotée d'un sommet supérieur (11), et
la section incurvée (10), d'un côté du sommet (11), se fond dans ledit bras (7) et, de l'autre côté, présente à l'extrémité, dans la direction longitudinale de l'armature (1), une distance par rapport au sommet (11) qui se situe dans une plage de 50 à 100 mm.

5. Armature (1) selon l'une des revendications précédentes,
**caractérisée en ce que**
dans la direction longitudinale de l'armature (1), la distance (C) entre l'épaulière (2-1) et la partie de contact (2-2) se situe dans une plage de 400 à 800 mm.

6. Dispositif de relevé d'espace (30) comportant au moins un dispositif de balayage et une armature (1) selon l'une des revendications 1 à 5.

7. Dispositif de relevé d'espace (30) selon la revendication 6,
**caractérisé en ce que**
le dispositif de balayage est un premier scanner multiple (31) et le premier scanner multiple (31) est fixé au premier support (6) de l'armature (1) au-dessus de la tête de la personne (49) lorsque la personne (49) porte le dispositif de relevé d'espace (30) à l'aide de l'armature (1).

8. Dispositif de relevé d'espace (30) selon la revendication 7,
**caractérisé en ce que**
le premier scanner multiple (31) est orienté de telle façon qu'un plan central balayé (X1) du premier scanner multiple (31) forme, avec un plan horizontal (H2), un premier angle (β) qui se situe dans une plage de 5 à 20° lorsque la personne (49) porte le dispositif de relevé d'espace (30) à l'aide de l'armature (1).

9. Dispositif de relevé d'espace (30) selon l'une des revendications 6 à 8,
**caractérisé en ce que**
au moins une caméra (32), et notamment une pluralité de caméras (32), est également fixée au premier support (6) de l'armature (1) au-dessus de la tête de la personne (49) lorsque la personne (49) porte le dispositif de relevé d'espace (30) à l'aide de l'armature (1), et l'angle de capture (γ) de la ou des caméras (32) se situe dans un plan vertical compris dans une plage de 170 à 210°, ladite personne (49) se trouvant hors de l'angle de capture (γ) de la ou des caméras (32), lorsque la personne (49) porte le dispositif de relevé d'espace (30) à l'aide de l'armature (1).

10. Dispositif de relevé d'espace (30) selon les revendications 7 à 9,
**caractérisé en ce que**
le premier scanner multiple (31) est disposé au-dessus des caméras (32).

11. Dispositif de relevé d'espace (30) selon l'une des revendications 6 à 10,
**caractérisé en ce que**
un deuxième support (12), auquel est fixé un deuxième scanner multiple (36), est disposé sur le bras (7) de l'armature (1).

12. Dispositif de relevé d'espace (30) selon la revendication 11,
**caractérisé en ce que**
le deuxième scanner multiple (36) est orienté de telle façon qu'un plan central balayé (X2) du deuxième scanner multiple (36) forme, avec un plan vertical, un deuxième angle qui se situe dans une plage de -10 à +10° lorsque ladite personne porte le dispositif de relevé d'espace (30) à l'aide de l'armature (1).

13. Dispositif de relevé d'espace (30) selon l'une des revendications 6 à 12,
**caractérisé en ce que**
l'armature (1) définit des points de placement (37) sur lesquels le dispositif de relevé d'espace (30) peut reposer librement sur un plan horizontal (H3) de telle façon que le premier scanner multiple (31) et/ou le deuxième scanner multiple (36) et/ou la ou les caméras (32) ne touchent pas le plan horizontal (H3).

14. Dispositif de relevé d'espace (30) selon l'une des revendications 6 à 13,
**caractérisé en ce que**
le dispositif de relevé d'espace (30) comporte au moins un repère permettant de détecter la position et/ou l'orientation du dispositif de relevé d'espace (30) par rapport à un système de coordonnées fixe.

15. Dispositif de relevé d'espace (30) selon l'une des revendications 9 à 14,
**caractérisé en ce que**
un dispositif d'évaluation (42) est fixé sur l'armature (1), au-dessous de la tête de la personne (49) lorsque la personne (49) porte le dispositif de relevé d'espace (30) à l'aide de l'armature (1), lequel dispositif d'évaluation est connecté aux caméras (32) et/ou au premier scanner multiple (31) pour un échange de données, la transmission des données s'effectuant par le biais d'une interface de mutualisation et de synchronisation (43), l'interface de mutualisation et de synchronisation (43) étant fixée au-dessus de la tête de la personne (49).
